# EUROPEAN PATENT SPECIFICATION

(11) **EP 3 023 464 B1**
(45) Date of publication and mention of the grant of the patent: **22.07.2020**
(21) Application number: 15195085.4
(22) Date of filing: 18.11.2015
(51) Int. Cl.: C09D 11/328, C09D 11/40, B41M 5/00, D06P 5/30

(54) **AQUEOUS INK FOR INKJET PRINTING, INK SET AND INKJET PRINTING METHOD**
WÄSSRIGE TINTE ZUM TINTENSTRAHLDRUCKEN, TINTENSATZ UND TINTENSTRAHLDRUCKVERFAHREN
ENCRE AQUEUSE POUR IMPRESSION À JET D'ENCRE, JEU D'ENCRE ET PROCÉDÉ D'IMPRESSION À JET D'ENCRE

(30) Priority: 19.11.2014 JP 2014234569; 12.03.2015 JP 2015049540
(43) Date of publication of application: 25.05.2016
(73) Proprietor: Konica Minolta, Inc., Tokyo 100-7015 (JP)
(72) Inventor: Kawashima, Kouki, Tokyo, Tokyo 100-7015 (JP); Obara, Masami, Tokyo, Tokyo 100-7015 (JP)
(74) Representative: Gille Hrabal

(56) References cited:
- EP-A1- 2 777 940
- CN-A- 101 629 026
- CN-A- 101 768 376

## Description

### Technical Field

The present invention relates to an aqueous ink for inkjet printing, an ink set, and an inkjet printing method.

### Background Art

The printing of cloth by means of an inkjet recording method (hereinafter, also referred to simply as "inkjet printing") includes the steps of: discharging an ink from an inkjet head to allow the ink to be landed on cloth; imparting steam to the cloth on which the ink is landed to fix dyes contained in the ink to fiber of the cloth; and removing unfixed dyes by washing the cloth to which steam is imparted, and the printing is performed through these steps. Unlike conventional printing by means of roller methods or the like, the inkjet printing does not need to produce a plate, and thus the steps can be simplified. In addition, the inkjet printing can form an image with rich gradient by adjusting the type of ink and a position on which the ink is landed. Further, the inkjet printing only needs an ink of an amount required for image formation, and thus there is less liquid waste than those of conventional methods.

In the inkjet printing, it is necessary to properly select the type of ink in accordance with the type of cloth on which an image is formed. For example, in inkjet printing for artificial fibers such as polyester fiber and the like having a hydrophobic structure, an image is formed on cloth using an ink with disperse dyes dispersed in water.

In the inkjet printing, there is a case where dyeing is performed by combining a black ink with an ink of each color of yellow, magenta and cyan, from the viewpoint of expanding the color gamut of an image to be formed. There is a known technique in which, in such a case, using, as the black ink, an ink containing a combination of a red type disperse dye, a blue type disperse dye, and at least one selected from an orange type disperse dye and a yellow type disperse dye leads to the development of natural hue of black at high concentration after fixing.

For example, Patent Literature (hereinafter, referred to as "PTL") 1 discloses an ink containing C.I. Disperse Orange (hereinafter, referred to simply as "DO")-29, C.I. Disperse Red (hereinafter, referred to simply as "DR")-177, and C.I. Disperse Blue (hereinafter, referred to simply as "DB")-291:1 capable of developing natural hue of black at various concentrations from high concentration to low concentration. Further, PTLs 2 and 3 disclose an inkjet printing ink containing C.I. Disperse Blue (hereinafter, referred to simply as "DB")-60 or DB-165, C.I. Disperse Red (hereinafter, referred to simply as "DR")-92 or DR-154, and C.I. Disperse Yellow (hereinafter, referred to simply as "DY")-163 capable of developing natural hue of black at various concentrations from high concentration to low concentration.

### Citation List

### Patent Literature

PTL 1
   US Patent Application Publication No. 2007/0107626
PTL 2
   Japanese Patent Application Laid-Open No. 2014-177526
PTL 3
   Japanese Patent Application Laid-Open No. 2014-224216

### Summary of Invention

### Technical Problem

In the inkjet printing, in order to enhance the beautiful appearance of printed cloth, it is sometimes required to form images with a similar color tone not only on the surface of ink-landing side (hereafter, referred to simply as "front surface") of the cloth, but also on the surface of the opposite side (hereafter, referred to simply as "rear surface") of the cloth. However, in conventional inks, there is a case where the same color tone cannot be obtained on the front surface and the rear surface of the cloth.

Further, when an ink containing disperse dyes of a plurality of colors in combination is used to perform inkjet printing, one or a plurality of disperse dye(s) may sometimes bleed to the outside of an image from the edge of a portion on which the image should be formed, thus causing the image to be blurred at times.

Furthermore, when disperse dyes in an ink precipitate in the ink during storage or during ejection to be particles with a large volume, the particle may sometimes block a narrow passage or nozzle of an inkjet printing apparatus, thus causing the lowering of ejectability of the ink from a discharge head. Therefore, from the viewpoint of enhancing ejectability, an ink for inkjet printing is required to have such a property that particles having a large volume are less likely to grow during storing.

In view of the above-described circumstances, an object of the present invention is to provide an aqueous ink for inkjet printing capable of developing similar color tones on at least both of the front surface and the rear surface at high concentration, without disperse dyes being likely to bleed out of the edge of a portion on which an image should be formed, and without particles having a large volume being likely to grow during storage, and an ink set and an inkjet printing method using the aqueous ink.

### Solution to Problem

A first aspect of the present invention relates to a first aqueous ink for inkjet printing as set forth below:
[1] A first aqueous ink for inkjet printing containing water and disperse dyes, the disperse dyes comprising at least one selected from an orange type disperse dye and a yellow type disperse dye, a red type disperse dye, and a blue type disperse dye, wherein in case of a blue type disperse dye the amount of the blue type disperse dye is 2.0 wt% or more and 3.5 wt% or less to the total mass of the first aqueous ink, and wherein
   the red type disperse dye is a compound represented by Formula (1): 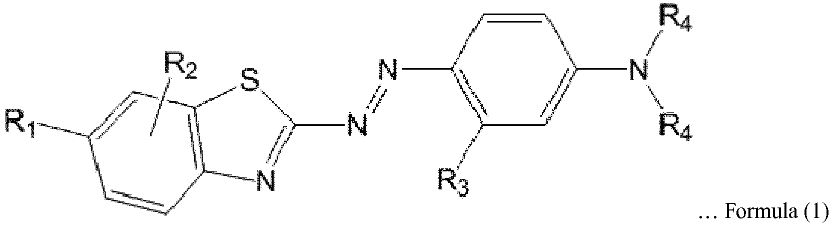 where
   R₁ is a nitro group or a chloro group,
   R₂ is a hydrogen atom when R₁ is a nitro group, and is a chloro group when R₁ is a chloro group,
   R₃ is a hydrogen atom or a methyl group,
   one R₄ is a cyanoethyl group, and
   the other R₄ is selected from the group consisting of an ethyl group, a cyanoethyl group, an acetoxyethyl group and an ethyl carbonateethyl group, and
   the blue type disperse dye is a compound represented by Formula (2): 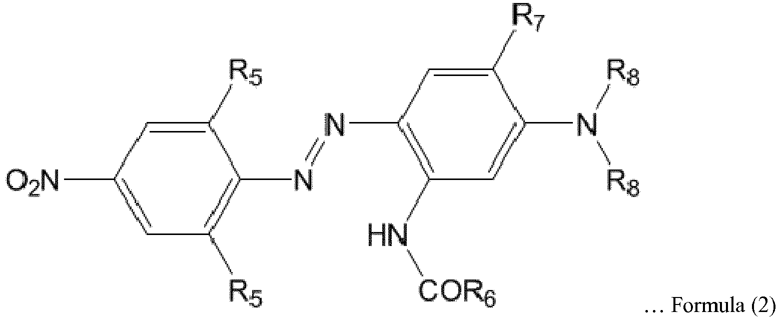
   where
   each R₅ is independently a group selected from the group consisting of a cyano group, a nitro group, and a bromo group, with the proviso that when one R₅ is a nitro group, the other R₅ is not a nitro group, and that when one R₅ is a bromo group, the other R₅ is not a bromo group,
   R₆ is a methyl group or an ethyl group,
   R₇ is selected from the group consisting of a hydrogen atom, a methoxy group and an ethoxy group, and
   each R₈ is independently selected from the group consisting of a hydrogen atom, an ethyl group, a cyanoethyl group, a benzyl group, an acetoxyethyl group and a methoxyethyl group,
   with R₇ being an ethoxy group when at least one R₈ is an acetoxyethyl group, and
   with R₇ being a hydrogen atom or a methoxy group when R₈ is other than an acetoxyethyl group, and
   wherein the first aqueous ink further contains at least one seleceted from the group consisting of polyethylene glycol having a molecular weight of 400 or more and 1,000 or less, polypropylene glycol having a molecular weight of 400 or more and 1,000 or less and a compound represented by formula (3): 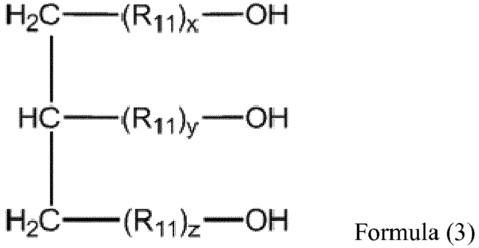 where, each of R11 represents an ethylene glycol group or a propylene glycol group, any of x, y and z is a positive integer, and x+y+z = 3 to 30.
[2] The first aqueous ink according to [1], in which the red type disperse dye included in the first aqueous ink is C.I. Disperse Red-154 or C.I. Disperse Red-177.
[3] The first aqueous ink according to [1] or [2], in which the blue type disperse dye included in the first aqueous ink is C.I. Disperse Blue-79 or C.I. Disperse Blue-165.
[4] The first aqueous ink according to any one of [1] to [3], in which the first aqueous ink further includes a blue type disperse dye having a maximum absorption wavelength of 630 nm or more and 680 nm or less.
[5] The first aqueous ink according to any one of [1] to [4], in which the first aqueous ink further contains an acrylic resin having an acid value of 150 mgKOH/g or less.
[6] The first aqueous ink according to any one of [1] to [5], in which the first aqueous ink is a black ink.
[7] An ink set including the first aqueous ink according to any one of [1] to [6].
[8] An inkjet printing method for forming an image on cloth with an aqueous ink, in which an image is formed using the first aqueous ink according to any one of [1] to [6].
[9] The inkjet printing method according to [8], in which portion of the cloth where an image is formed is cloth including polyester fiber.

### Advantageous Effects of Invention

According to the present invention, an aqueous ink for inkjet printing capable of developing similar color tones on both of the front surface and the rear surface at high concentration, without disperse dyes being likely to bleed out of the edge of a portion on which an image should be formed, and without particles having a large volume being likely to grow during storage, and an ink set and an inkjet printing method using the aqueous ink are provided.

### Brief Description of Drawings

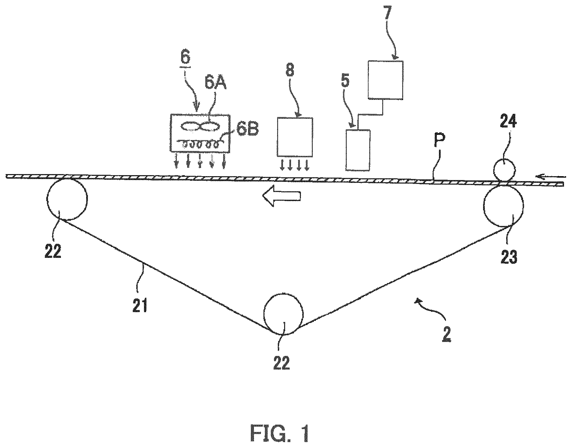

FIG. 1 is a partial schematic view of an example of a configuration of an inkjet printing apparatus capable of performing an image forming step of the inkjet printing method of the present invention.

### Description of Embodiments

### 1. First Aqueous Ink for Inkjet Printing

The first aqueous ink for inkjet printing according to the present invention (hereinafter, referred to simply as "first ink of the present invention") contains water and disperse dyes. The first ink of the present invention includes, as the disperse dyes, a red type disperse dye, a blue type disperse dye, and at least one selected from an orange type disperse dye and a yellow type disperse dye.

The first ink of the present invention develops a satisfactory color tone also on the rear surface of inkjet-printed cloth to thereby reduce the color tone difference between the front surface and the rear surface, and makes bleeding less likely to occur from the edge of an image. These are considered to be due to the following reasons.

When steam is imparted to cloth on which ink droplets are landed, the heat allows the movement of macromolecules constituting cloth fiber to be active, and thus hydrophobic disperse dyes dissolved into the high temperature steam are likely to infiltrate into the fiber structure of polyester which is a hydrophobic cloth. Thus, the disperse dyes infiltrate into the fiber structure and is fixed, to thereby allow the cloth to be colored. When the disperse dyes contained in the ink droplets infiltrates into the fiber structure, it diffuses in a direction from the front surface to the rear surface through the surface of the fiber structure of the cloth. At that time, disperse dyes, which are less likely to be dissolved into the steam, among a plurality of disperse dyes contained in the ink droplets, are likely to be distributed to the fiber structure rather than to the steam due to its high hydrophobicity, are likely to infiltrate into and to be fixed to the fiber structure, and thus are less likely to be diffused to the rear surface through the surface of the fiber structure of the cloth. Conversely, disperse dyes, which are likely to be dissolved into the steam, are likely to be distributed to the steam rather than to the fiber structure due to its low hydrophobicity, are less likely to infiltrate into the fiber structure, and thus are likely to be diffused to the rear surface of the cloth through the surface of the fiber structure. Therefore, when there is a difference in the solubility to the steam between the disperse dyes, the color tone difference between the front surface and the rear surface of the cloth becomes larger, because the color tone by the disperse dyes, which are less likely to be diffused to the rear surface (less likely to be dissolved into the steam), are less likely to be developed than the color tone by the disperse dyes which are likely to be diffused to the rear surface (likely to be dissolved into the steam) on the rear surface of the cloth.

Further, the disperse dyes, which are likely to be dissolved into the steam, are less likely to infiltrate into and to be fixed to the fiber structure, are likely to be diffused through the surface of the fiber, and thus are likely to be diffused to the outside of the edge of the image, causing the bleeding to occur at the edge of the image.

According to the findings of the present inventors, particularly when there is a difference in the solubility to the steam (likeliness to infiltrate into the fiber structure) between the red type disperse dye and the blue type disperse dye contained in the ink, the color tone difference between the front surface and the rear surface of the cloth becomes larger, and the bleeding is likely to occur at the edge of the image.

It is noted that, when disperse dyes having too high solubility to steam is contained in an ink, the disperse dyes having too high solubility are dissolved into the aqueous content in the ink and promotes the crystalline growth of other disperse dyes which are not dissolved, to thereby sometimes form particles having a large volume (Ostwald growth). The formation of such particles having a large volume sometimes causes the lowering of ejectability of the ink from a discharge nozzle. On the other hand, disperse dyes having too low solubility also has low solubility to water at normal temperature, and thus precipitates and flocculates during storing of the ink to sometimes cause the lowering of storability as well as ejectability of the ink.

The solubility of such disperse dyes to water may be set to about 1.0 × 10⁻⁶ to 1.0 × 10⁻⁴ mol/L. When the solubility is lower than 1.0 × 10⁻⁶ mol/L, it becomes difficult to diffuse the disperse dyes to the rear surface of the cloth to sometimes make it impossible to meet the needs of uniformizing the color tones and concentrations of the front surface and the rear surface. On the other hand, when the solubility is higher than 1.0 × 10⁻⁴ mol/L, the difference in the solubility between the dyes becomes wider, and the color tone difference between the front surface and the rear surface becomes wider. In addition, Ostwald growth is likely to occur, which leads to the possibility of the lowering of ejectability of the ink from a discharge nozzle.

When each disperse dye content in the ink is increased in order to develop black at high concentration, the viscosity of the ink becomes higher, and thus the ejectability is deteriorated. In order to develop black at high concentration without increasing the disperse dye content, it is desirable to allow the ink to contain a red type disperse dye and a blue type disperse dye having an equivalent absorbance of 35,000 or more and 200,000 or less per gram of the dyes.

The equivalent absorbance per gram of the dyes can be determined as follows: the disperse dyes are diluted with acetone to have a concentration such that the maximum absorbance is in a range of from 0.5 to 1.0, the absorbance of the diluted liquid is measured using a spectrophotometer (UV-VIS SPECTROPHOTOMETER V-550, manufactured by JASCO Corporation), and the measured value is multiplied by a dilution rate to determine the equivalent absorbance per gram of the dyes.

According to the findings of the present inventors, the red type disperse dye having the structure represented by Formula (1) and the blue type disperse dye having the structure represented by Formula (2) have a small difference therebetween in the solubility to the steam. Each solubility is neither too high nor too low, and each equivalent absorbance also satisfies the above-mentioned conditions. Therefore, the aqueous ink of the present invention containing these disperse dyes has a small color tone difference between the front surface and the rear surface of the cloth, without bleeding being likely to occur at the edge of an image, and has satisfactory storability and ejectability of the ink.

The ink of the present invention is preferably a black ink. From the viewpoint of developing black at high concentration, the first ink of the present invention preferably has a maximum absorbance of 4,000 or more. From the viewpoint of developing black at higher concentration, the first ink of the present invention more preferably has a maximum absorbance of 5,500 or more.

The maximum absorbance of the first ink can be determined as follows: the first ink is diluted with acetone, and the absorption spectrum of a visible region is measured using a spectrophotometer (UV-VIS SPECTROPHOTOMETER V-550, manufactured by JASCO Corporation), and the value of absorbance at a wavelength at which the absorbance is maximum is multiplied by a dilution rate to be able to determine the maximum absorbance of the first ink. It is noted that the dilution rate is preferably set such that the measured value of the maximum absorbance is ranged between 0.5 and 1.0.

### 1-1. Disperse Dyes in First Ink

The disperse dyes in the first ink include a red type disperse dye, a blue type disperse dye, and at least one selected from an orange type disperse dye and a yellow type disperse dye. The disperse dyes may include other disperse dyes in such a range as to enable preparation of an ink that exhibits a black color when cloth is dyed, and that achieves the effects of the present invention. It is noted that, in the present invention, dyes are identified by color index names registered in Colour Index, a database prepared jointly by Society Dyers and Colourists and American Association of Textile Chemists and Colorists.

From the viewpoints of allowing color development to be more satisfactory and of adjusting the viscosity of the first ink of the present invention to such a range that the ink can be well discharged from a discharge head, the disperse dye content in the first ink is preferably 3wt% or more and 20wt% or less to the total mass of the ink. From the viewpoint of developing black at higher concentration, the disperse dye content is more preferably 8wt% or more and 15wt% or less, even more preferably 10wt% or more and 15wt% or less, and yet even more preferably 12wt% or more and 15wt% or less to the total mass of the ink.

### 1-1-1. Red Type Disperse Dye

The red type disperse dye in the first ink is a compound represented by Formula (1). Either only one or two or more of the red type disperse dyes may be contained in the first ink of the present invention.

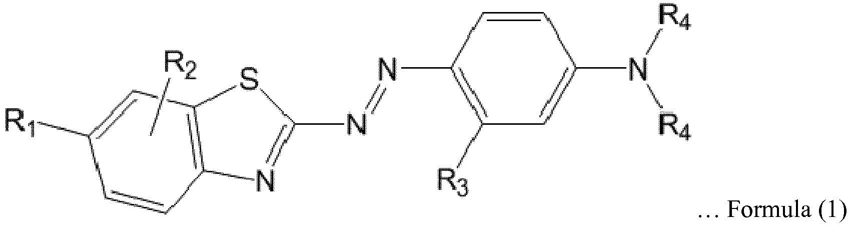

In Formula (1), R₁ is a nitro group or a chloro group, R₂ is a hydrogen atom when R₁ is a nitro group, and is a chloro group when R₁ is a chloro group, R₃ is a hydrogen atom or a methyl group, one of R₄ is a cyanoethyl group, and the other of R₄ is selected from the group consisting of an ethyl group, a cyanoethyl group, an acetoxyethyl group and an ethyl carbonateethyl group.

Examples of the compound represented by Formula (1) include DR-145, DR-152, DR-154, and DR-177.

From the viewpoint of easily adjusting the combination of disperse dyes so as to have a black image at higher concentration, DR-154 and DR-177 are preferred, since the disperse dyes have higher concentration of color development.

The red type disperse dye content can be any amount as long as a desired black color tone is obtained by allowing the red type disperse dye to be contained in the ink together with other disperse dyes, and is, for example, 2.8wt% or more and 5.0wt% or less to the total mass of the first ink of the present invention.

### 1-1-2. Blue Type Disperse Dye

The blue type disperse dye in the first ink is a compound represented by Formula (2). Either only one or two or more of the blue type disperse dyes may be contained in the first ink of the present invention.

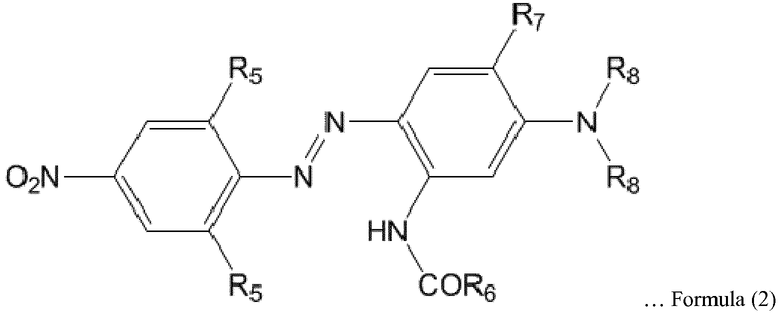

In Formula (2), R₅ is independently a group selected from the group consisting of a cyano group, a nitro group, and a bromo group, with the proviso that when one of R₅ is a nitro group, the other of R₅ is not a nitro group, and that when one of R₅ is a bromo group, the other of R₅ is not a bromo group, R₆ is a methyl group or an ethyl group, R₇ is selected from the group consisting of a hydrogen atom, a methoxy group and an ethoxy group, R₈ is independently selected from the group consisting of a hydrogen atom, an ethyl group, a cyanoethyl group, a benzyl group, an acetoxyethyl group and a methoxyethyl group, with R₇ being an ethoxy group when at least one of R₈ is an acetoxyethyl group, and with R₇ being a hydrogen atom or a methoxy group when R₈ is other than an acetoxyethyl group.

Examples of the compound represented by Formula (2) include DB-79, DB-165, DB-165:1, DB-183, DB-257, DB-281 and DR-291.

From the viewpoint of enhancing the ejectability from an inkjet head and the storability of the ink, DB-79 and DB-165 are preferred.

The blue type disperse dye content can be any amount as long as a desired black color tone is obtained by allowing the blue type disperse dye to be contained in the ink together with other disperse dyes, and is, for example, 2.0wt% or more and 3.5wt% or less to the total mass of the first ink of the present invention.

### 1-1-3. Yellow Type Disperse Dye or Orange Type Disperse Dye

The yellow type disperse dye or the orange type disperse dye in the first ink is contained in the ink together with the red type disperse dye and the blue type disperse dye. Either only one or both of the yellow type disperse dye and the orange type disperse dye may be contained in the first ink of the present invention in such a range as to enable preparation of an ink that exhibits a black color when cloth is dyed, and that achieves the effects of the present invention. Further, two or more of the yellow type disperse dyes or two or more of the orange type disperse dyes may be contained in the first ink of the present invention.

Examples of the yellow type disperse dye include C.I. Disperse Yellow (hereinafter, referred to simply as "DY")-3, DY-4, DY-5, DY-7, DY-9, DY-13, DY-23, DY-24, DY-30, DY-33, DY-34, DY-42, DY-44, DY-49, DY-50, DY-51, DY-54, DY-56, DY-58, DY-60, DY-63, DY-64, DY-66, DY-68, DY-71, DY-74, DY-76, DY-79, DY-82, DY-83, DY-85, DY-86, DY-88, DY-90, DY-91, DY-93, DY-98, DY-99, DY-100, DY-104, DY-108, DY-114, DY-116, DY-118, DY-119, DY-122, DY-124, DY-126, DY-135, DY-140, DY-141, DY-149, DY-160, DY-162, DY-163, DY-164, DY-165, DY-179, DY-180, DY-182, DY-183, DY-184, DY-186, DY-192, DY-198, DY-199, DY-202, DY-204, DY-210, DY-211, DY-215, DY-216, DY-218, DY-224, DY-227, DY-231, and DY-232.

From the viewpoints of allowing the hue of black to be natural and of developing the color at a desired concentration, DY-54, DY-114, DY-149, DY-160, and DY-163 are preferred.

Examples of the orange type disperse dye include DO-1, DO-3, DO-5, DO-7, DO-11, DO-13, DO-17, DO-20, DO-21, DO-25, DO-29, DO-30, DO-31, DO-32, DO-33, DO-37, DO-38, DO-42, DO-43, DO-44, DO-45, DO-46, DO-47, DO-48, DO-49, DO-50, DO-53, DO-54, DO-55, DO-56, DO-57, DO-58, DO-59, DO-61, DO-66, DO-71, DO-73, DO-76, DO-78, DO-80, DO-89, DO-90, DO-91, DO-93, DO-96, DO-97, DO-119, DO-127, DO-130, DO-139, and DO-142.

From the viewpoints of allowing the hue of black to be natural and of developing the color at a desired concentration, DO-29, DO-32, DO-47, DO-61, and DO-73 are preferred.

The total content of the yellow type disperse dye and the orange type disperse dye can be any amount as long as a desired black color tone is obtained by allowing the yellow type disperse dye or the orange type disperse dye to be contained in the ink together with other disperse dyes, and is, for example, 2.5wt% or more and 3.5wt% or less to the total mass of the first ink of the present invention.

### 1-1-4. Long-Wavelength Blue Disperse Dye

Other disperse dyes in the first ink include a blue type disperse dye having a maximum absorption wavelength (hereinafter, referred to simply as "long-wavelength blue disperse dye") of 630 nm or more and 680 nm or less. The long-wavelength blue disperse dye can enhance the absorption on a long-wavelength side of the first ink of the present invention to broaden the wavelength distribution of light that can be absorbed by the first ink of the present invention. An image formed by the first ink with low absorption on the long-wavelength side sometimes looks reddish under such light including much long-wavelength light as sunlight due to the reflection of the long-wavelength light that is less likely to be absorbed, even though the image looks black under such light including less long-wavelength light as light from a fluorescent lamp. However, when the long-wavelength blue disperse dye is contained in the first ink of the present invention to thereby enhance the absorption on the long-wavelength side, the formed image can also absorb the long-wavelength light more sufficiently, and thus the formed image looks more similar in color shade irrespective of the spectral distribution of irradiated light. Either only one or two or more of the long-wavelength blue disperse dyes may be contained in the first ink of the present invention.

### Examples of the long-wavelength blue disperse dye include DB-60.

From the viewpoint of reducing the difference in the color shade due to the spectral distribution of irradiated light, the long-wavelength blue disperse dye content is preferably 1.6wt% or more and 2.6wt% or less to the total mass of the first ink.

### 1-1-5. Other Disperse Dyes

Other disperse dyes in the first ink include a red type disperse dye which is not the compound represented by Formula (1), a blue type disperse dye which is not the compound represented by Formula (2), and disperse dyes of colors other than those mentioned above, such as a violet type disperse dye and a green type disperse dye. Either only one or two or more of other disperse dyes may be contained in the first ink of the present invention.

Examples of the red type disperse dye which is not the compound represented by Formula (1) include DR-179 and DR-191.

Examples of the blue type disperse dye which is not the compound represented by Formula (2) include DB-60.

### 1-2. Other Components

The first ink of the present invention may contain a water-soluble organic solvent, a dispersant, an antiseptic or fungicide, a pH adjuster, a dye dissolution aid, an antifoaming agent, a conductivity adjustment agent, a deep coloring agent, a level dyeing agent, or a penetrating agent, in such a range as to achieve the effects of the present invention. Either only one or two or more of these components may be contained in the first ink of the present invention.

### 1-2-1. Dispersant

The dispersant can enhance the dispersability of disperse dyes to suppress the occurrence of bubbles in the first ink of the present invention, the gelation of the ink, and the increase in the viscosity of the first ink. The dispersant can be selected in accordance with the disperse dyes, in consideration of influence on wetting capacity, micronizing capacity, dispersion stability, cloth dyeability, fixability, level dyeability, dye migration and fastness, as well as unlikelihood of tarring, and the like.

Examples of the dispersant include formalin condensates of creosote oil sodium sulfonate, formalin condensates of sodium cresolsulfonate and sodium 2-naphthol-6-sulfonate, formalin condensates of sodium cresolsulfonate, formalin condensates of sodium phenolsulfonate, formalin condensates of sodium β-naphtholsulfonate, formalin condensates containing sodium β-naphthalenesulfonate and sodium β-naphtholsulfonate, alkylene oxides including ethylene oxide and propylene oxide, alkylatable compounds such as fatty alcohols, fatty amines, fatty acids, phenols, alkylphenols and amine carboxylates, ligninsulphonates, sodium paraffinsulfonates, copolymers of α-olefin and maleic anhydride, known comb-shaped block polymers, and acrylic resins having an acidic group.

Examples of the comb-shaped polymer include DISPERBYK-190, DISPERBYK-194N, DISPERBYK-2010, DISPERBYK-2015 and BYK-154 (BYK, Inc., "DISPERBYK" is a registered trademark of this company), and JONCRYL PDX-6102B, JONCRYL PDX-6124, JONCRYL JDX-6639 and JONCRYL JDX-6500 (BASF, Inc., "JONCRYL" is a registered trademark of this company).

From the viewpoints of further increasing the concentration of an image sample and of preventing discharge failure, the dispersant is preferably an acrylic resin having an acid value of 150 mgKOH/g or less.

Examples of commercially available products of the dispersant which is an acrylic resin having an acid value of 150 mgKOH/g or less include DISPERBYK-190, DISPERBYK-2010, DISPERBYK-2015, JONCRYL 586, JONCRYL PDX-6102B, JONCRYL PDX-6124, JONCRYL JDX-6500, BASF, Inc., ("JONCRYL" is a registered trademark of this company), and FLOWLEN TG-750W, Kyoeisha Chemical Co., Ltd.

Examples of other dispersants which can be used in the present invention include JONCRYL 52J and JONCRYL 57J, BASF, Inc.

The amount of the dispersant can be set at 20 parts by mass or more and 200 parts by mass or less when the total mass of the disperse dyes is set at 100 parts by mass. Setting the amount of the dispersant at 20 parts by mass or more further enhances the dispesability of the disperse dyes. Setting the amount of the dispersant at 200 parts by mass or less can suppress the lowering of ejectability due to the dispersant.

### 1-2-2. Water-Soluble Organic Solvent

Examples of the water-soluble organic solvent include alcohols such as methanol, ethanol, propanol, isopropanol, butanol, isobutanol, sec-butanol and t-butanol, polyhydric alcohols such as ethylene glycol, diethylene glycol, triethylene glycol, polyethylene glycol, propylene glycol, dipropylene glycol, polypropylene glycol, butylene glycol, hexanediol, pentanediol, compounds and other glycerols represented by Formula (3), hexanetriol, thiodiglycol, 1,2-butanediol, 1,2-pentanediol, 1,2-hexanediol and 1,2-heptanediol, amines such as ethanolamine, diethanolamine, triethanolamine, N-methyldiethanolamine, N-ethyldiethanolamine, morpholine, N-ethylmorpholine, ethylenediamine, diethylenediamine, triethylenetetramine, tetraethylenepentamine, polyethyleneimine, pentamethyldiethylenetriamine and tetramethylpropylenediamine, amides such as formamide, N,N-dimethylformamide and N,N-dimethylacetamide, heterocyclic compounds such as 2-pyrrolidone, N-methyl-2-pyrrolidone, cyclohexylpyrrolidone, 2-oxazolidone and 1,3-dimethyl-2-imidazolidinone, sulfoxides such as dimethylsulfoxide, and glycol ethers such as diethylene glycol alkyl ether, triethylene glycol alkyl ether and dipropylene glycol alkyl ether.

The first aqueous ink comprises a compound of the formula (3)

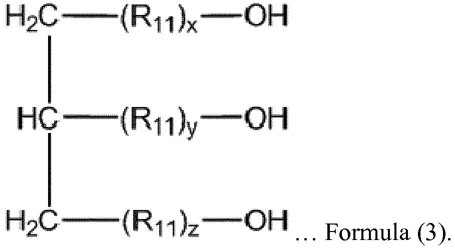

In Formula (3), each of R₁₁ represents an ethylene glycol group or a propylene glycol group, any of x, y and z is a positive integer, and x+y+z = 3 to 30.

From the viewpoint of adjusting the infiltration of the disperse dyes into the fiber structure of cloth to further reduce the color tone difference between the front and the rear of the cloth, the water-soluble organic solvent preferably includes at least one selected from polyethylene glycol having a molecular weight of 400 or more and 1,000 or less, polypropylene glycol having a molecular weight of 400 or more and 1,000 or less, and a compound represented by Formula (3). From the above viewpoint, polyethylene glycol having a molecular weight of 400 or more and 1,000 or less is more preferred.

The water-soluble organic solvent content can be set at 2wt% or more and 20wt% or less to the total mass of the first ink of the present invention. By setting the water-soluble organic solvent content at 2wt% or more to the total mass of the first ink of the present invention, it becomes possible to reduce the color tone difference between the front and the rear of cloth. By setting the water-soluble organic solvent content at 20wt% or less to the total mass of the first ink of the present invention, it becomes possible to further prevent the ink from being highly viscous and not to cause unstable inkjet ejection to easily occur.

The total amount of the water-soluble organic solvent can be set at 20wt% or more and 70wt% or less to the total mass of the first ink of the present invention. By setting the amount of the water-soluble organic solvent at 20wt% or more to the total mass of the first ink of the present invention, it becomes possible to further enhance the dispersability of the disperse dyes and to further enhance the ejectability. By setting the amount of the water-soluble organic solvent at 70wt% or less to the total mass of the first ink of the present invention, it becomes possible to allow the drying properties of the ink of the present invention to be satisfactory even when the water-soluble organic solvent is contained.

### 1-2-3. Antiseptic or Fungicide

Examples of the antiseptic or the fungicide include aromatic halogen compounds, methylene dithiocyanate, halogen nitrogen sulfur containing compounds, and 1,2-benzisothiazolin-3-one (e.g., PROXEL GXL (manufactured by Arch Chemicals, Inc., PROXEL is a registered trademark of this company)).

### 1-2-4. Surfactant

Examples of the surfactant include anionic surfactants such as dialkylsulfosuccinates, alkylnaphthalenesulfonates and fatty acid salts, nonionic surfactants such as polyoxyethylene alkyl ethers, polyoxyethylene alkyl allyl ethers, acetylene glycols and polyoxyethylene-polyoxypropylene block copolymers, cationic surfactants such as alkylamine salts, and quaternary ammonium salts, and silicone surfactants and fluorine surfactants.

### 1-3. Physical Properties of First Ink of the Present Invention

The viscosity of the first ink of the present invention at 25°C is preferably 1 mPa·s or more and 40 mPa·s or less, more preferably 5 mPa·s or more and 40 mPa·s or less, and even more preferably 5 mPa·s or more and 20 mPa·s or less, from the viewpoint of further enhancing the ejectability of the ink. The viscosity of the first ink can be measured at 25°C and 20 rpm using E-type viscometer (e.g., V-25, manufactured by Toki Sangyo Co., Ltd.).

The surface tension of the first ink of the present invention at 25°C is preferably 25 mN/m or more and 50 mN/m or less. When the surface tension is 25 mN/m or more, bleeding of an image is less likely to occur. When the surface tension is 50 mN/m or less, the first ink of the present invention is more likely to infiltrate into cloth. The surface tension of the first ink can be measured using, for example, CBVP-Z, manufactured by Kyowa Interface Science Co., Ltd.

### 1-4. Preparation of First Ink of the Present Invention

The first ink of the present invention can be prepared by mixing the above-mentioned disperse dyes, water, and the above-mentioned other components contained arbitrarily and dispersing the disperse dyes. The disperse dyes may be dispersed using a disperser such as ball mill, sand mill, line mill or high-pressure homogenizer. From the viewpoint of preventing nozzle clogging for stable ejection, the disperse dyes are preferably dispersed so as to have a volume average particle diameter of 300 nm or less and a maximum particle diameter of 900 nm or less. The volume average particle diameter of the disperse dyes can be measured at normal temperature (25°C) by means of dynamic light scattering method using Zetasizer 1000, manufactured by Malvern Instruments Ltd., ("Zetasizer" is a registered trademark of Malvern Instruments Ltd.) for an ink diluted 200 times.

### 3. Ink set of the Present Invention

The ink set of the present invention preferably includes at least one of the first ink of the present invention. The first ink of the present invention is preferably a black ink, as described above

### 4. Inkjet Printing Method

The inkjet printing method of the present invention is an inkjet printing method for forming an image on cloth with the first ink of the present invention (hereinafter, also referred to simply as "ink of the present invention" or "ink" altogether), in which the ink indicates the above-mentioned first ink. The inkjet printing method of the present invention can be performed similarly to known inkjet printing methods except that the above-mentioned ink of the present invention is employed as an inkjet printing ink.

For example, the inkjet printing method of the present invention includes the steps of: discharging ink droplets of the present invention from a recording head to cloth (image formation step); fixing dyes contained in the ink of the present invention landed on the cloth to fibers of the cloth (color development step); and washing the cloth with the dyes being fixed to the fibers thereof to remove dyes that could not be fixed to the fibers (washing step). The inkjet printing method of the present invention may further include a step of adding a pretreatment agent to the cloth (pretreatment step), or drying the washed cloth (drying step), as necessary.

### 4-1. Image Formation Step

The image formation step is a step for forming an image prior to color development by discharging ink droplets of the present invention from a recording head to cloth. For example, the cloth is moved relative to a head carriage loaded with a plurality of recording heads, while ink droplets are discharged from the recording heads, and are landed on the cloth, to thereby enable formation of an image prior to color development. It is noted that when forming an image using inks of a plurality of colors including the ink of the present invention, ink droplets of the respective colors may be discharged either separately or concurrently. From the viewpoint of suppressing the bleeding in the image prior to color development, the cloth may be heated as necessary before performing the present step.

### 4-2. Color Development Step

The color development step is a step for fixing dyes to fibers of the cloth by imparting steam at high temperature to the cloth on which the image prior to color development is formed. The color development step allows the original hue of the ink to be developed. Examples of the method of fixing dyes to fibers of the cloth include steaming method, HT steaming method, HP steaming method, thermofixing method, alkali pad steam method, alkali blotch steam method, alkali shock method, and alkali cold fixing method. When applying steam at high temperature with an HT steamer, treatment at 160°C or more and 180°C or less for 5 minutes or more and 20 minutes or less is preferred; when applying steam at high pressure with an HP steamer, treatment at 130°C or more and 140°C or less for about 30 minutes is preferred.

### 4-3. Washing Step

The washing step is a step for washing the cloth after the above-described color development step to remove dyes that could not be fixed to the fiber of the cloth and a pretreatment agent. The present step can be any step as long as the step can remove the dyes and the pretreatment agent, and the cloth may be washed either with water or a soaping solution. Examples of the soaping solution include a mixed solution of caustic soda, a surfactant and hydrosulfite.

### 4-4. Pretreatment Step

In order to prevent the bleeding of an ink on a cloth to obtain a bright image, the method of the present invention may provide a pretreatment step before the image formation step to add a pretreatment agent containing water-soluble polymers as a sizing agent in advance. Examples of the method of adding the pretreatment agent include padding method, coating method, and spray method. The amount of addition (squeezing rate) of the pretreatment agent depends on the type of cloth, and the use application thereof, and may be, for example, 0.2wt% or more and 90wt% or less to the total mass of the cloth.

Examples of the water-soluble polymer include a natural water-soluble polymer and a synthesized water-soluble polymer. Examples of the natural water-soluble polymer include starches from corn, wheat and the like, cellulose derivatives such as carboxymethyl cellulose, methyl cellulose and hydroxyethyl cellulose, polysaccharides such as sodium alginate, guar gum, tamarind gum, locust bean gum and gum arabic, and protein substances such as gelatin, casein and keratin. Examples of the synthesized water-soluble polymer include polyvinyl alcohol, polyvinyl pyrrolidone and acrylic acid-based polymer.

It is preferable that the pretreatment agent further includes a pH regulator. From the viewpoint of enabling formation of a bright image at high concentration, it is more preferable that the PH regulator is an acid. Examples of the PH regulator that is an acid include citric acid, malic acid and tartaric acid.

The pretreatment agent may further contain arbitrary components such as a reduction inhibitor, a chelating agent and an antiseptic, as necessary. Examples of the reduction inhibitor include sodium m-nitrobenzenesulfonate. Examples of the chelating agent include aminopolycarboxylate, hydroxycarboxylate, polycarboxylate, ethylenediaminetetraacetic acid (EDTA), nitrilotriacetic acid and diethylenetriaminepentaacetic acid. Examples of the antiseptic include aromatic halogen compounds such as N-(3-chlorophenyl)isopropylcarbamate, methylene dithiocyanate, and 1,2-benzisothiazolin-3-one.

### 4-5. Drying Step

The drying step is a step for drying the washed cloth. Examples of the drying method include non-mechanical drying by means of squeezing or airing the washed cloth, and mechanical drying by means of a drying machine (heat roll or iron).

### 4-6. Cloth

In the cloth, at least a portion in which an image is formed is composed mainly of fibers such as cellulose fibers, amide fibers, polyester fibers, polyurethane fibers and acrylic fibers. Specific examples of the fibers include cotton, hemp, wool, silk, viscous rayon, cupra rayon, polynosic, vinylon, nylon, acrylic, polyurethane, rayon polyurethane, polyester and acetate. From the viewpoint of the satisfactory color development of the disperse dyes, a cloth in which the portion in which an image is formed is composed mainly of polyester fibers is preferable. From the viewpoint of further enhancing the fixability of the disperse dyes, the radius of the fiber is preferably 10 d or more and 100 d or less.

### 4-7. Inkjet Printing Apparatus

The above-mentioned image formation step can be performed by loading the ink of the present invention into a conventionally-known inkjet printing apparatus.

FIG. 1 is a partial schematic view of an example of a configuration of an inkjet recording apparatus. The inkjet recording apparatus includes conveying mechanism 2 that conveys cloth, head carriage 5 loaded with a plurality of recording heads (not illustrated) that discharges an inkjet ink to the cloth, ink tank 7 that stores the ink to be supplied to head carriage 5, air blower 6 that blows warm air to the cloth, and steam mechanism 8 that imparts steam.

Conveying mechanism 2 includes viscous belt 21, support roller 22, conveying roller 23, and nip roller 24. Viscous belt 21 is held by support roller 22 and conveying roller 23, and is circulated among support rollers 22 and conveying roller 23. Nip roller 24 is disposed so as to face conveying roller 23 with viscous belt 21 interposed therebetween.

Head carriage 5 and ink tank 7 are in fluid communication with each other, and the ink of the present invention stored in ink tank 7 is fed from ink tank 7 to head carriage 5 when printing.

Head carriage 5, steam mechanism 8 and air blower 6 are disposed above cloth P. Air blower 6 includes therein fan 6A and heating element 6B so as to be able to control temperature. A recording head to be loaded in head carriage 5 is not particularly limited, and may be either a thermal head or a piezo head. The nozzle diameter of the recording head is preferably 10 µm or more and 100 µm or less, and more preferably 10 µm or more and 50 µm or less, because nozzle clogging is likely to occur due to insoluble matters when the nozzle diameter is less than 10 µm, and because the sharpness of the formed image is lowered when the nozzle diameter is more than 100 µm, on the other hand. Further, the size of an ink droplet to be discharged is preferably 4 pl or more and 150 pl or less, and more preferably 5 pl or more and 80 pl or less, because the discharged ink droplets are likely to be influenced by an air stream near the head when the size of the ink droplet is less than 4 pl, and because there is conspicuous granular feeling of the formed image when the size of the ink droplet is more than 150 pl, on the other hand. Steam mechanism 8 is disposed between head carriage 5 and air blower 6. Steam mechanism 8 is a steamer capable of imparting steam in accordance with an image to be formed.

The inkjet recording apparatus applicable to the present invention may include an ink control section (not illustrated) that controls the discharge of an ink of each color, according to set conditions for image formation.

When conveying roller 23 is driven, cloth P disposed on the upper surface of viscous belt 21 is conveyed to the lower surface of nip roller 24. Cloth P is pressurized by viscous belt 21 and nip roller 24, and is fixed onto viscous belt 21. Cloth P fixed on viscous belt 21 is conveyed to a location below head carriage 5. A plurality of recording heads loaded in head carriage 5 discharges ink droplets of the ink of the present invention fed from ink tank 7, and allows the ink droplets to land on a certain area (landable area) of the cloth to which a pretreatment agent is added to form an image. Next, high-temperature steam is imparted to the cloth by steam mechanism 8 to fix dyes to fibers of the cloth. Further, air at arbitrary temperature is blown from air blower 6 to dry the image formed on cloth P.

As illustrated in FIG. 1, the inkjet recording apparatus preferably typically has steam mechanism 8, but is not limited to this aspect. For example, when the color development step is performed by means of methods other than steam, the inkjet recording apparatus does not need to have steam mechanism 8.

### Examples

Hereinafter, the present invention will be described further in detail with reference to examples, but the scope of the present invention is not construed to be limited by these descriptions.

### 1. Preparation and Evaluation of First Ink

### [Preparation of Dispersion Liquid]

DISPERBYK-190 (manufactured by BYK, Inc., a comb-shaped block polymer dispersant, acid value 10, solid content 40%) which is a dispersant and ion-exchanged water were stirred and mixed until they become uniform, and the respective disperse dyes listed in Table 1 were then added and premixed. Subsequently, the mixture was dispersed with a sand grinder loaded with 50 vol% of 0.5 mm zirconia beads, until Z-average particle diameter measured by means of dynamic light scattering method using Zetasizer 1000, manufactured by Malvern Instruments Ltd., ("Zetasizer" is a registered trademark of this company) was within a range of 90 nm or more and 180 nm or less to prepare dispersion liquids 1 to 16 having a dye solid content of 20wt%. The dispersant, ion-exchanged water, and disperse dye were mixed in the following mass ratio:

| | |
|---|---|
| Dispersant: | 12.5 parts by mass |
| Ion-exchanged water: | 67.5 parts by mass |
| Disperse dyes: | 20.0 parts by mass |

The "equivalent absorbance per gram of dyes" described in Table 1 is a value determined as follows: each of the disperse dyes is diluted with acetone to have a concentration such that the maximum absorbance is in a range of from 0.5 to 1.0, the absorbance of the diluted liquid is measured using a spectrophotometer (UV-VIS SPECTROPHOTOMETER V-550, manufactured by JASCO Corporation), and the measured value is multiplied by the dilution rate to determine the equivalent absorbance per gram of the dyes.

### [Table 1]

**Table 1: Disperse dyes added to each dispersion liquid**

| Dispersion liquid No. | Dye type | Dye name | Structure | Equivalent absorbance per gram of dye | Maximum absorption wavelength (nm) |
|---|---|---|---|---|---|
| 1 | Yellow type disperse dye | DY-114 | - | - | - |
| 2 | Yellow type disperse dye | DY-163 | - | - | - |
| 3 | Orange type disperse dye | DO-29 | - | - | - |
| 4 | Red type disperse dye | DR-145 | Formula (1) | 164000 | 527 |
| 5 | Red type disperse dye | DR-152 | Formula (1) | 122000 | 520 |
| 6 | Red type disperse dye | DR-154 | Formula (1) | | |
| 7 | Red type disperse dye | DR-177 | Formula (1) | 120000 | 523 |
| 8 | Red type disperse dye | DR-179 | - | 154000 | 534 |
| 9 | Red type disperse dye | DR-191 | - | 40000 | 512 |
| 10 | Blue type disperse dye | DB-79 | Formula (2) | 60800 | 584 |
| 11 | Blue type disperse dye | DB-165 | Formula (2) | 190000 | 611 |
| 12 | Blue type disperse dye | DB-165:1 | Formula (2) | | |
| 13 | Blue type disperse dye | DB-183 | Formula (2) | 99000 | 583 |
| 14 | Blue type disperse dye | DB-257 | Formula (2) | 87000 | 579 |
| 15 | Blue type disperse dye | DB-291 | Formula (2) | 89000 | 611 |
| 16 | Blue type disperse dye | DB-60 | - | 43000 | 666 |

### [Preparation of Ink 1-1]

The following dispersion liquids were mixed at a mass ratio set forth below to prepare mixed dispersion liquid 1.

| | |
|---|---|
| Dispersion liquid No. 1: | 25.0 parts by mass |
| Dispersion liquid No. 4: | 35.0 parts by mass |
| Dispersion liquid No. 9: | 25.0 parts by mass |
| Dispersion liquid No. 16: | 20.0 parts by mass |

Ion-exchanged water, ethylene glycol (EG), glycerol (GLY) and polyethylene glycol #600 (PEG#600) as a solvent, BYK-348 (manufactured by BYK, Inc., BYK is a registered trademark of this company) as a silicone surfactant, and PROXEL GXL (manufactured by Arch Chemicals, Inc., PROXEL is a registered trademark of this company) as a fungicide were mixed at a mass ratio set forth below to prepare diluted liquid 1.

| Ion-exchanged water: | Remaining part (adjusted to have ratios in Table 2) |
|---|---|
| EG: | 35.0 parts by mass |
| GLY: | 10.0 parts by mass |
| PEG#600: | 4.0 parts by mass |
| Surfactant: | 0.1 parts by mass |
| Fungicide: | 0.2 parts by mass |

Diluted liquid 2 was prepared similarly to diluted liquid 1 except that polypropylene glycol #400 (PPG#400) was mixed in place of PEG#600. Diluted liquid 3 was prepared similarly to diluted liquid 1 except that a compound represented by Formula (3) (Liponic EG-1, manufactured by Lipo Chemicals Inc.) was mixed in place of PEG#600.

Diluted liquid 1 was added to mixed dispersion liquid 1 having been mixed in advance, followed by stirring, mixed uniformly, and then filtered with a 1 µm-mesh filter to obtain ink 1-1.

### [Preparation of Inks 1-2 to 1-28]

Similarly, inks 1-2 to 1-28 containing disperse dyes at mass ratios set forth in Tables 2 to 5 were obtained.

### [Table 2]

**Table 2: Compositions of inks 1-1 to 1-6**

| Ink No. | | 1-1 | 1-2 | 1-3 | 1-4-1 | 1-4-2 | 1-4-3 | 1-4-4 | 1-5 | 1-6 |
|---|---|---|---|---|---|---|---|---|---|---|
| Dispersion liquid (Yellow type disperse dye) | 1 | 2.5 | 2.5 | 2.5 | 2.5 | 2.5 | 2.5 | 2.5 | 2.5 | 2.5 |
| | 2 | | | | | | | | | |
| Dispersion liquid (Orange type disperse dye) | 3 | | | | | | | | | |
| Dispersion liquid (Red type disperse dye) | 4 | 3.5 | | | | | | | | |
| | 5 | | 3.5 | | | | | | | |
| | 6 | | | 3.5 | | | | | | |
| | 7 | | | | 3.5 | 3.5 | 3.5 | 3.5 | | |
| | 8 | | | | | | | | 3.5 | |
| | 9 | | | | | | | | | 3.5 |
| Dispersion liquid (Blue type disperse dye) | 10 | 2.5 | 2.5 | 2.5 | 2.5 | 2.5 | 2.5 | 2.5 | 2.5 | 2.5 |
| | 11 | | | | | | | | | |
| | 12 | | | | | | | | | |
| | 13 | | | | | | | | | |
| | 14 | | | | | | | | | |
| | 15 | | | | | | | | | |
| | 16 | 2.0 | 2.0 | 2.0 | 2.0 | 2.0 | 2.0 | 2.0 | 2.0 | 2.0 |
| Dispersant | | 2.6 | 2.6 | 2.6 | 2.6 | 2.6 | 2.6 | 2.6 | 2.6 | 2.6 |
| Solvent | EG | 35.0 | 35.0 | 35.0 | 35.0 | 35.0 | 35.0 | 35.0 | 35.0 | 35.0 |
| | GLY | 10.0 | 10.0 | 10.0 | 10.0 | 10.0 | 10.0 | 10.0 | 10.0 | 10.0 |
| | PEG#600 | 4.0 | 4.0 | 4.0 | 4.0 | | | | 4.0 | 4.0 |
| | PPG#400 | | | | | 4.0 | | | | |
| | Formula (3) | | | | | | 4.0 | | | |
| Surfactant | | 0.1 | 0.1% | 0.1 | 0.1 | 0.1 | 0.1 | 0.1 | 0.1 | 0.1 |
| Fungicide | | 0.2 | 0.2% | 0.2 | 0.2 | 0.2 | 0.2 | 0.2 | 0.2 | 0.2 |
| Ion-exchanged water | | 48.1 | 37.6 | 37.6 | 37.6 | 37.6 | 37.6 | 41.6 | 37.6 | 37.6 |

Tables 2 to 5 show the compositions (each numerical value indicates wt%) of inks 1-1 to 1-28.

### [Table 3]

**Table 3: Compositions of inks 1-7 to 1-14**

| Ink No. | | 1-7 | 1-8 | 1-9 | 1-11 | 1-12 | 1-13 | 1-14 |
|---|---|---|---|---|---|---|---|---|
| Dispersion liquid (Yellow type disperse dye) | 1 | | | 2.0 | 3.5 | 2.5 | 2.5 | 2.5 |
| | 2 | 2.5 | | | | | | |
| Dispersion liquid (Orange type disperse dye) | 3 | | 2.5 | | | | | |
| Dispersion liquid (Red type disperse dye) | 4 | | | | | 3.5 | | |
| | 5 | | | | | | 3.5 | |
| | 6 | | | | | | | 3.5 |
| | 7 | 3.5 | 3.5 | 2.8 | 5.0 | | | |
| | 8 | | | | | | | |
| | 9 | | | | | | | |
| Dispersion liquid (Blue type disperse dye) | 10 | 2.5 | 2.5 | 2.0 | 3.5 | | | |
| | 11 | | | | | 2.5 | 2.5 | 2.5 |
| | 12 | | | | | | | |
| | 13 | | | | | | | |
| | 14 | | | | | | | |
| | 15 | | | | | | | |
| | 16 | 2.0 | 2.0 | 1.6 | 2.8 | 2.0 | 2.0 | 2.0 |
| Dispersant | | 2.6 | 2.6 | 2.1 | 3.7 | 2.6 | 2.6 | 2.6 |
| Solvent | EG | 35.0 | 35.0 | 35.0 | 35.0 | 35.0 | 35.0 | 35.0 |
| | GLY | 10.0 | 10.0 | 10.0 | 10.0 | 10.0 | 10.0 | 10.0 |
| | PEG#600 | 4.0 | 4.0 | 4.0 | 4.0 | 4.0 | 4.0 | 4.0 |
| | PPG#400 | | | | | | | |
| | Formula (3) | | | | | | | |
| Surfactant | | 0.1 | 0.1 | 0.1 | 0.1 | 0.1 | 0.1 | 0.1 |
| Fungicide | | 0.2 | 0.2 | 0.2 | 0.2 | 0.2 | 0.2 | 0.2 |
| Ion-exchanged water | | 37.6 | 37.6 | 40.2 | 32.2 | 37.6 | 37.6 | 37.6 |

### [Table 4]

**Table 4: Compositions of inks 1-15 to 1-20**

| Ink No. | | 1-15-1 | 1-15-2 | 1-15-3 | 1-15-4 | 1-16 | 1-17 | 1-18 | 1-19 | 1-20 |
|---|---|---|---|---|---|---|---|---|---|---|
| Dispersion liquid (Yellow type disperse dye) | 1 | 2.5 | 2.5 | 2.5 | 2.5 | 2.5 | | | 2.5 | 2.5 |
| | 2 | | | | | | 2.5 | | | |
| Dispersion liquid (Orange type disperse dye) | 3 | | | | | | | 2.5 | | |
| Dispersion liquid (Red type disperse dye) | 4 | | | | | | | | | |
| | 5 | | | | | | | | | |
| | 6 | | | | | | | | 3.5 | 3.5 |
| | 7 | 3.5 | 3.5 | 3.5 | 3.5 | | 3.5 | 3.5 | | |
| | 8 | | | | | | | | | |
| | 9 | | | | | 3.5 | | | | |
| Dispersion liquid (Blue type disperse dye) | 10 | | | | | | | | | |
| | 11 | 2.5 | 2.5 | 2.5 | 2.5 | 2.5 | 2.5 | 2.5 | | |
| | 12 | | | | | | | | 2.5 | |
| | 13 | | | | | | | | | 2.5 |
| | 14 | | | | | | | | | |
| | 15 | | | | | | | | | |
| | 16 | 2.0 | 2.0 | 2.0 | 2.0 | 2.0 | 2.0 | 2.0 | 2.0 | 2.0 |
| Dispersant | | 2.6 | 2.6 | 2.6 | 2.6 | 2.6 | 2.6 | 2.6 | 2.6 | 2.6 |
| Solvent | EG | 35.0 | 35.0 | 35.0 | 35.0 | 35.0 | 35.0 | 35.0 | 35.0 | 35.0 |
| | GLY | 10.0 | 10.0 | 10.0 | 10.0 | 10.0 | 10.0 | 10.0 | 10.0 | 10.0 |
| | PEG#600 | 4.0 | | | | 4.0 | 4.0 | 4.0 | 4.0 | 4.0 |
| | PPG#400 | | 4.0 | | | | | | | |
| | Formula (3) | | | 4.0 | | | | | | |
| Surfactant | | 0.1 | 0.1 | 0.1 | 0.1 | 0.1 | 0.1 | 0.1 | 0.1 | 0.1 |
| Fungicide | | 0.2 | 0.2 | 0.2 | 0.2 | 0.2 | 0.2 | 0.2 | 0.2 | 0.2 |
| Ion-exchanged water | | 37.6 | 37.6 | 37.6 | 41.6 | 37.6 | 37.6 | 37.6 | 37.6 | 37.6 |

### [Table 5]

**Table 5: Compositions of inks 1-21 to 1-28**

| Ink No. | | 1-21 | 1-22 | 1-23 | 1-24 | 1-25 | 1-26 | 1-27 | 1-28 |
|---|---|---|---|---|---|---|---|---|---|
| Dispersion liquid (Yellow type disperse dye) | 1 | 2.5 | 2.5 | 2.5 | 2.5 | 2.5 | 2.5 | 2.5 | 2.5 |
| | 2 | | | | | | | | |
| Dispersion liquid (Orange type disperse dye) | 3 | | | | | | | | |
| Dispersion liquid (Red type disperse dye) | 4 | | | | | | | | |
| | 5 | | | | | | | | |
| | 6 | 3.5 | 3.5 | | | | | 3.5 | |
| | 7 | | | | | 3.5 | 3.5 | | |
| | 8 | | | | | | | | |
| | 9 | | | 3.5 | 3.5 | | | | |
| Dispersion liquid (Blue type disperse dye) | 10 | | | | | | | | |
| | 11 | | | | | | | | |
| | 12 | | | | | | | | |
| | 13 | | | | | | | | |
| | 14 | 2.5 | 2.5 | 2.5 | 2.5 | | | | |
| | 15 | | | | | 2.5 | 2.5 | | 2.5 |
| | 16 | 2.0 | | 2.0 | | 2.0 | | 2.0 | 2.0 |
| Dispersant | | 2.6 | 2.1 | 2.6 | 2.1 | 2.6 | 2.1 | 2.0 | 1.8 |
| Solvent | EG | 35.0 | 35.0 | 35.0 | 35.0 | 35.0 | 35.0 | 35.0 | 35.0 |
| | GLY | 10.0 | 10.0 | 10.0 | 10.0 | 10.0 | 10.0 | 10.0 | 10.0 |
| | PEG#600 | 4.0 | 4.0 | 4.0 | 4.0 | 4.0 | 4.0 | 4.0 | 4.0 |
| | PPG#400 | | | | | | | | |
| | Formula (3) | | | | | | | | |
| Surfactant | | 0.1% | 0.1 | 0.1 | 0.1 | 0.1 | 0.1 | 0.1 | 0.1 |
| Fungicide | | 0.2 | 0.2 | 0.2 | 0.2 | 0.2 | 0.2 | 0.2 | 0.2 |
| Ion-exchanged water | | 37.6 | 40.1 | 37.6 | 40.1 | 37.6 | 40.1 | 40.7 | 42.0 |

### [Inkjet Printing]

A 15 cm × 15 cm rectangle was printed on pretreated polyester fibers at a coverage rate of 100% Duty and at 540 dpi × 720 dpi using the above-prepared inks 1-1 to 1-28 and using an inkjet printer Nassenger-V (manufactured by Konica Minolta, Inc., "Nassenger" is a registered trademark of Konica Minolta IJ Technologies, Inc.).

As the pretreated polyester fibers, polyester fibers with a thread thickness of 50 d had been immersed in an aqueous carboxymethyl cellulose solution, squeezed and dried were used. After the printing, the cloth was subjected to HT steam treatment at 170°C for 10 minutes, followed by water washing, and was subjected to reduction cleaning at 80°C with 0.2% aqueous hydrosulfite solution, followed further by sufficient water washing and drying.

### [Evaluation and Measurement]

The image sample thus obtained was evaluated according to Evaluations 1 to 3 and 6 set forth below. Ejectability was evaluated for inks 1-1 to 1-28 according to Evaluation 4 set forth below. Storability was evaluated for inks 1-1 to 1-28 according to Evaluation 5 set forth below. Further, maximum absorbance was measured for inks 1-1 to 1-28 according to the following method.

### [Evaluation 1: Color Tone Difference Between Front and Rear]

The color tones on the front and the rear of the image sample were evaluated by visual inspection according to the following standards:
1: There is no color tone difference at all between the front surface and the rear surface
2: There is a slight color tone difference between the front surface and the rear surface, but the difference is hardly noticeable
3: There is a color tone difference between the front surface and the rear surface, but the difference is acceptable
4: There is a large color tone difference between the front surface and the rear surface, and the difference is unacceptable

### [Evaluation 2: Bleeding at Edge Portion]

An image edge portion of the image sample was evaluated by visual inspection according to the following standards:
1: There is no bleeding at all at the edge portion
2: There is extremely slight bleeding at the edge portion, but the bleeding is hardly noticeable
3: There is bleeding at the edge portion, but the bleeding is acceptable
4: There is large bleeding at the edge portion, and the bleeding is unacceptable

### [Evaluation 3: Maximum Concentration]

The concentration of the image sample was evaluated using X-RITE colorimeter and by visual inspection according to the following standards:
1: It is possible to evaluate by visual inspection that the image sample has sufficient concentration
2: It is possible to judge by visual inspection that the image sample has sufficient concentration, although the numerical value by the colorimeter is somewhat lower than the intended concentration
3: It is possible to judge by visual inspection that the image sample has low concentration, but the concentration is acceptable
4: The image sample fails to have sufficient concentration also by visual inspection, and the concentration is unacceptable

### [Evaluation 4: Ejectability]

The respective inks were ejected from the inkjet printer Nassenger-V at a coverage rate of 100% Duty at 25°C and in the low-humidity environment of 30% relative humidity, followed by temporary suspension of the ejection for 10 minutes, and were discharged again. During the redischarging, observation was made, for 256 nozzles, as to the number of occurrence of non-discharge nozzles, the number of occurrence of nozzles with shifted discharge angle (bent nozzle), and whether or not fine spray (splash) other than main droplets occurs. When these events occurred, it was judged that the ink was dried and adhered to the nozzle during the temporary suspension.
1: After the redischarging, there is no occurrence of non-discharge nozzle, with no increase in splash, either
2: After the redischarging, there is occurrence of about one or two bent nozzle(s), but the occurrence has no influence on the quality of the image, with no increase in splash, either
3: After the redischarging, there is occurrence of about one or two non-discharge nozzle(s), also with slight increase in splash, but the occurrence has little influence on the quality of the image, which is acceptable
4: After the redischarging, there is occurrence of three or more non-discharge nozzles, also with conspicuous splash, and the quality of the image was deteriorated to an unacceptable level

### [Evaluation 5: Ink Storability]

The ink storability was evaluated by comparing Z-average particle diameter before and after the ink storage. The respective inks were stored at 50°C for 1 week and compared by measuring Z-average particle diameter of dispersed particles before and after the storage by means of dynamic light scattering method using Zetasizer 1000, manufactured by Malvern Instruments Ltd.
2: The width of the variation in Z-average particle diameter between before and after the storage is less than 10 nm
3: The width of the variation in Z-average particle diameter between before and after the storage is more than 10 nm and less than 30 nm (acceptable limit)
4: The width of the variation in Z-average particle diameter between before and after the storage is more than 30 nm

### [Evaluation 6: Color Tone Difference Between Different Light Sources]

An image sample was observed by visual inspection under an indoor fluorescent lamp (daylight color) and under outdoor sunlight to evaluate whether there is a difference in a black color tone of the image sample.
2: There is no color tone difference between under the fluorescent lamp and under sunlight
3: There is a slight color tone difference between under the fluorescent lamp and under sunlight, but the difference is acceptable
4: There is a color tone difference between under the fluorescent lamp and under sunlight, and the image sample looks to have a relatively strong reddish color under sunlight

### [Measurement of Maximum Absorbance]

Each of inks 1-1 to 1-28 was diluted with acetone, followed by measurement of the absorption spectrum of a visible region using a spectrophotometer (UV-VIS SPECTROPHOTOMETER V-550, manufactured by JASCO Corporation), and the value of absorbance at a wavelength at which the absorbance is maximum is multiplied by the dilution rate to obtain a value, which is defined as the maximum absorbance. It is noted that the dilution rate was set such that the measured value of the maximum absorbance was ranged between 0.5 and 1.0.

The results of Evaluations 1 to 6 made on image samples obtained from the respective inks 1-1 to 1-28 and the maximum absorbance of inks 1-1 to 1-28 are shown in Table 6.

### [Table 6]

**Table 6: Results of Evaluations 1 to 6 and maximum absorbance**

| Ink No. | Evaluation 1 | Evaluation 2 | Evaluation 3 | Evaluation 4 | Evaluation 5 | Evaluation 6 | Maximum absorbance | Note |
|---|---|---|---|---|---|---|---|---|
| 1-1 | 2 | 2 | 2 | 2 | 2 | 2 | 4500 | Example |
| 1-2 | 2 | 2 | 2 | 2 | 2 | 2 | 4500 | Example |
| 1-3 | 2 | 2 | 2 | 2 | 2 | 2 | 4500 | Example |
| 1-4-1 | 1 | 1 | 2 | 2 | 2 | 2 | 5000 | Example |
| 1-4-2 | 2 | 1 | 2 | 2 | 2 | 2 | 5000 | Example |
| 1-4-3 | 2 | 1 | 2 | 2 | 2 | 2 | 5000 | Example |
| 1-4-4 | 3 | 1 | 2 | 2 | 2 | 2 | 5000 | Example |
| 1-5 | 4 | 4 | 2 | 2 | 2 | 2 | 4500 | Comparative example |
| 1-6 | 4 | 4 | 4 | 2 | 2 | 2 | 3000 | Comparative example |
| 1-7 | 2 | 2 | 2 | 2 | 2 | 2 | 5000 | Example |
| 1-8 | 2 | 2 | 2 | 2 | 2 | 2 | 5000 | Example |
| 1-9 | 1 | 1 | 3 | 2 | 2 | 2 | 4000 | Example |
| 1-10 | 1 | 1 | 1 | 2 | 2 | 2 | 6000 | Example |
| 1-11 | 1 | 1 | 1 | 2 | 2 | 2 | 7100 | Example |
| 1-12 | 2 | 2 | 2 | 2 | 2 | 2 | 4500 | Example |
| 1-13 | 2 | 2 | 2 | 2 | 2 | 2 | 4500 | Example |
| 1-14 | 2 | 2 | 2 | 2 | 2 | 2 | 4500 | Example |
| 1-15-1 | 1 | 1 | 1 | 2 | 2 | 2 | 5000 | Example |
| 1-15-2 | 2 | 1 | 1 | 2 | 2 | 2 | 5000 | Example |
| 1-15-3 | 2 | 1 | 1 | 2 | 2 | 2 | 5000 | Example |
| 1-15-4 | 3 | 1 | 1 | 2 | 2 | 2 | 5000 | Example |
| 1-16 | 4 | 4 | 4 | 2 | 2 | 2 | 3000 | Comparative example |
| 1-17 | 2 | 2 | 1 | 2 | 2 | 2 | 5000 | Example |
| 1-18 | 2 | 2 | 1 | 2 | 2 | 2 | 5000 | Example |
| 1-19 | 3 | 3 | 1 | 3 | 3 | 2 | 5000 | Example |
| 1-20 | 3 | 3 | 1 | 3 | 3 | 2 | 5000 | Example |
| 1-21 | 3 | 3 | 1 | 3 | 3 | 2 | 5000 | Example |
| 1-22 | 3 | 3 | 1 | 3 | 3 | 3 | 5000 | Example |
| 1-23 | 4 | 4 | 4 | 3 | 3 | 2 | 3000 | Comparative example |
| 1-24 | 4 | 4 | 4 | 3 | 3 | 3 | 3000 | Comparative example |
| 1-25 | 2 | 2 | 1 | 3 | 3 | | 5000 | Example |
| 1-26 | | | 1 | 3 | 3 | 3 | 5000 | Example |
| 1-27 | 4 | 3 | 4 | 2 | 2 | 4 | 3000 | Comparative example |
| 1-28 | 4 | 3 | 4 | 2 | 2 | 4 | 3000 | Comparative example |

Inks containing the red type disperse dye and the blue type disperse dye having the structure of the present invention had less color tone difference between the front and the rear as well as less bleeding at the edge portion (Ink Nos. 1-1 to 1-4-4, 1-6 to 1-15-4, 1-17 to 1-22, 1-25, and 1-26).

When the ink contained DB-60 being a long wavelength blue disperse dye, a color tone difference was less likely to occur between under the fluorescent lamp and under sunlight (according to the comparison between Ink Nos. 1-21 and 1-22 and the comparison between ink Nos. 1-25 and 1-26).

When the total mass of the disperse dyes to the total mass of the ink was 12wt% ore more, the concentration of the image sample was increased (Ink Nos. 1-10 and 1-11).

When the red type disperse dye was DR-154 or DR-177, the concentration of the image sample was able to be adjusted so as to be increased further (Ink Nos. 10, 11, 15-1 to 15-4, and 17 to 22).

When the blue type disperse dye was DB-79 or DB-165, the ejectability from the inkjet head and ink storability became higher (Ink Nos. 1-1 to 1-4-4, 1-6 to 1-15-4, 1-17, and 1-18).

When the ink contained at least one selected from polyethylene glycol having a molecular weight of 400 or more and 1,000 or less, polypropylene glycol having a molecular weight of 400 or more and 1,000 or less, and a compound represented by Formula (3), the color tone difference between the front and the rear was further decreased (according to the comparison between Ink Nos. 4-1 to 4-3 and 4-4 and the comparison between ink Nos. 1-15-1 to 1-15-3 and 1-15-4). Further, when the ink contained polyethylene glycol having a molecular weight of 400 or more and 1,000 or less, the color tone difference between the front and the rear was still further decreased (according to the comparison between Ink Nos. 1-4-1 and 1-4-2 to 1-4-3 and the comparison between ink Nos. 1-15-1 and 1-15-2 to 1-15-3).

On the other hand, when the red type disperse dye did not have the structure of Formula (1), both the color tone difference between the front and the rear and the bleeding at the edge portion were large (Ink Nos. 1-5, 1-6, 1-16, 1-23, and 1-24). Also when the blue type disperse dye did not have the structure of Formula (2), the color tone difference between the front and the rear was large (Ink No. 1-27).

When the ink did not include the red type disperse dye, the image sample did not have sufficient concentration (Ink No. 1-27).

### 2. Preparation and Evaluation of Second Ink

The second ink described in the following is not claimed.

### 2-1. Example 1

### [Preparation of Dispersion Liquid]

DISPERBYK-190 (190), manufactured by BYK, Inc. (a comb-shaped block polymer dispersant, acid value 10 mg KOH/g, solid content 40%) which is a dispersant and ion-exchanged water were stirred and mixed until they become uniform, and the respective disperse dyes listed in Table 7 were then added and premixed. Subsequently, the mixture was dispersed with a sand grinder loaded with 50 vol% of 0.5 mm zirconia beads, until Z-average particle diameter measured by means of dynamic light scattering method using Zetasizer 1000, manufactured by Malvern Instruments Ltd., ("Zetasizer" is a registered trademark of this company) was within a range of 90 nm or more and 180 nm or less to prepare dispersion liquids 1 to 9 having a disperse dye solid content of 20wt%. At this time, the amounts of the dispersant, ion-exchanged water, and disperse dyes were adjusted such that the disperse dye content was 20wt% to the total mass of the dispersant, and that the amount of the solid content of the dispersant was 30% to the total mass of the disperse dyes.

### [Table 7]

**Table 7: Disperse dyes added to each dispersion liquid**

| Dispersion liquid No. | Dye type | Dye name |
|---|---|---|
| 1 | Yellow type disperse dye | DY-114 |
| 2 | Red type disperse dye | DR-92 |
| 3 | Red type disperse dye | DR-152 |
| 4 | Red type disperse dye | DR-191 |
| 5 | Red type disperse dye | DR-179 |
| 6 | Violet type disperse dye | DV-57 |
| 7 | Violet type disperse dye | DV-93 |
| 8 | Blue type disperse dye | DB-60 |
| 9 | Blue type disperse dye | DB-183 |

### [Preparation of Ink 2-1]

Dispersion liquids 1, 2, 7 and 8 prepared as described in 2-1. Example 1, ethylene glycol (EG), propylene glycol (PG) and glycerol (GLY) as solvents, KF-351A (351A), manufactured by Shin-Etsu Chemical Co., Ltd., as a silicone surfactant, PROXEL GXL (GXL), manufactured by Arch Chemicals, Inc., as a fungicide, and ion-exchanged water were mixed at a mass ratio as set forth below, stirred and mixed uniformly, and subsequently filtered with a 1 µm-mesh filter to obtain ink 2-1.

| | |
|---|---|
| Dispersion liquid 1: | 3.0wt% |
| Dispersion liquid 2: | 5.2wt% |
| Dispersion liquid 7: | 2.7wt% |
| Dispersion liquid 8: | 10.0wt% |
| EG: | 30.0wt% |
| PG: | 10.0wt% |
| GLY: | 12.0wt% |
| 351A: | 0.2wt% |
| GXL: | 0.2wt% |
| Ion-exchanged water: | remaining part |

### [Preparation of Inks 2-2 to 2-9]

Similarly, inks 2-2 to 2-9 containing disperse dyes at mass ratios set forth in Table 8 were obtained.

Table 8 shows the compositions (each numerical value indicates wt%) of inks 2-1 to 2-9. In Table 8, the section of "component" indicates dispersion liquids mixed in each ink and the type of disperse dyes contained in each dispersion liquid, as well as abbreviated names of the above-mentioned respective components.

### [Table 8]

**Table 8: Compositions of inks 2-1 to 2-9**

| | Ink No. | 2-1 | 2-2 | 2-3 | 2-4 | 2-5 | 2-6 | 2-7 | 2-8 | 2-9 |
|---|---|---|---|---|---|---|---|---|---|---|
| | Component | | | | | | | | | |
| Yellow dispersion liquid | Dispersion liquid 1 (DY-114) | 3.0 | 3.0 | 3.0 | 3.0 | 3.0 | 1.5 | 1.4 | 3.0 | 3.0 |
| Red dispersion liquid | Dispersion liquid 2 (DR-92) | 5.2 | | | | 5.2 | 2.5 | 2. 7 | | 5.2 |
| | Dispersion liquid 3 (DR-152) | | | 1.2 | | | | | | |
| | Dispersion liquid 4 (DR-191) | | 3.8 | | 3.8 | | | | | |
| | Dispersion liquid 5 (DR-179) | | | | | | | | 1.0 | |
| Violet dispersion liquid | Dispersion liquid 6 (DV-57) | | | 9.0 | 9.0 | 9.0 | 5.0 | 5.0 | 9.0 | 9.0 |
| | Dispersion liquid 7 (DV-93) | 2.7 | 2.7 | | | | | | | |
| Blue dispersion liquid | Dispersion liquid 8 (DB-60) | 10.0 | 10.0 | 10.0 | 10.0 | 10.0 | 5.0 | 4.6 | 10.0 | |
| | Dispersion liquid 9 (DB-183) | | | | | | | | | 4.4 |
| Solvent | EG | 30.0 | 30.0 | 30.0 | 30.0 | 30.0 | 30.0 | 30.0 | 30.0 | 30.0 |
| | PG | 10.0 | 10.0 | 10.0 | 10.0 | 10.0 | 10.0 | 10.0 | 10.0 | 10.0 |
| | GLY | 12.0 | 12.0 | 12.0 | 12.0 | 12.0 | 12.0 | 12.0 | 12.0 | 12.0 |
| Surfactant | KF-351A | 0.2 | 0.2 | 0.2 | 0.2 | 0.2 | 0.2 | 0.2 | 0.2 | 0.2 |
| Fungicide | GXL | 0.2 | 0.2 | 0.2 | 0.2 | 0.2 | 0.2 | 0.2 | 0.2 | 0.2 |
| Ion-exchanged water | | Remaining part | Remaining part | Remaining part | Remaining part | Remaining part | Remaining part | Remaining part | Remaining part | Remaining part |

### [Measurement of Coordinate Value in Color Space]

Inks 2-1 to 2-9 were diluted 35 times with water, and then further diluted 20 times with acetone. Coordinated values in CIE L*a*b* color space of diluted inks 2-1 to 2-9 were measured using an ultraviolet-visible spectrophotometer V-650, JASCO Corporation. For calculation of the coordination values, color-matching function (JIS Z8701-1999) was used. The values of L*, a* and b* measured for each ink are shown in Table 9.

### [Inkjet Printing]

A 15 cm × 15 cm rectangle was printed on pretreated polyester fibers at a coverage rate of 100% Duty and at 540 dpi × 720 dpi using the above-prepared inks 2-1 to 2-9 and using an inkjet printer Nassenger-V (manufactured by Konica Minolta, Inc., "Nassenger" is a registered trademark of Konica Minolta IJ Technologies, Inc.).

As the pretreated polyester fibers, polyester fibers with a thread thickness of 50 d had been immersed in an aqueous carboxymethyl cellulose solution, squeezed and dried were used. After the printing, the cloth was subjected to HT steam treatment at 170°C for 10 minutes, followed by water washing, and was subjected to reduction cleaning at 80°C with a 0.2% aqueous hydrosulfite solution, followed further by sufficient water washing and drying.

### [Evaluation of Image Sample]

The image sample thus obtained was evaluated according to Evaluations 1 to 3 set forth below.

### [Evaluation 1: Color Tone Difference Between Front and Rear]

The color tones on the front and the rear of the image sample were evaluated by visual inspection according to the following standards:
1: There is no color tone difference at all between the front surface and the rear surface
2: There is a slight color tone difference between the front surface and the rear surface, but the difference is hardly noticeable
3: There is a color tone difference between the front surface and the rear surface, but the difference is acceptable
4: There is a large color tone difference between the front surface and the rear surface, and the difference is unacceptable

### [Evaluation 2: Bleeding at Edge]

An image edge of the image sample was evaluated by visual inspection according to the following standards:
1: There is no bleeding at all at the edge
2: There is extremely slight bleeding at the edge, but the bleeding is hardly noticeable
3: There is bleeding at the edge, but the bleeding is acceptable
4: There is large bleeding at the edge, and the bleeding is unacceptable

### [Evaluation 3: Neutrality]

The color tone of the image sample was evaluated by visual inspection according to the following standards:
1: There is no touch of hue in colors, and the image sample looks achromatic
2: There is a slight touch of color shade, but the color shade is hardly noticeable
3: There is a little touch of color shade
4: The image sample looks to have other tints being added to an achromatic color, such as a reddish color or a bluish color

The results of Evaluations 1 to 3 made on image samples obtained from the respective inks 2-1 to 2-9 are shown in Table 9.

### [Table 9]

**Table 9: Evaluations of inks 2-1 to 2-9**

| Ink No. | Coordinate value in color space | | | Evaluation 1 Color tone on front and rear | Evaluation 2 Edge bleeding | Evaluation 3 Neutrality | Note |
|---|---|---|---|---|---|---|---|
| | L* | a* | b* | | | | |
| 2-1 | 36.3 | -7.6 | -24.7 | 2 | 2 | 3 | Example |
| 2-2 | 37.3 | -11.0 | -21.5 | 2 | 2 | 3 | Example |
| 2-3 | 34.9 | -3.0 | -23.0 | 1 | 3 | 2 | Example |
| 2-4 | 36.3 | -6.1 | -22.2 | 1 | 2 | 2 | Example |
| 2-5 | 35.7 | -5.6 | -23.5 | 1 | 1 | 2 | Example |
| 2-6 | 57.8 | 7.1 | -27.7 | 1 | 1 | 1 | Example |
| 2-7 | 58.1 | 10.1 | -28.4 | 1 | 1 | 1 | Example |
| 2-8 | 34.6 | -7.1 | 26.4 | 4 | 4 | 3 | Comparative example |
| 2-9 | 34.2 | 32.3 | -18.7 | 3 | 3 | 4 | Comparative example |

The inks having a combination of disperse dyes of the present invention had less color tone difference between the front and the rear as well as less bleeding at the edge, and also had high neutrality (Ink Nos. 2-1 to 2-7).

When the ink contained DV-57 as the violet disperse dye, the color tone difference between the front and the rear was further decreased (according to the comparison between Ink Nos. 2-3 to 2-7 and 2-1 to 2-2).

When the ink contained DR-92 as the red disperse dye, the bleeding at the edge was further decreased (according to the comparison between Ink Nos. 2-5 to 2-7 and 2-1 to 2-4).

With the inks prepared such that the value L of coordinated values in CIE L*a*b* color space determined from an ultraviolet-visible absorption spectrum when diluting the ink 700 times was 50 or more, the inks were able to form an image perceived as grayer also by visual inspection (according to the comparison between Ink Nos. 2-6 to 2-7 and 2-1 to 2-5).

On the other hand, the inks having a combination of dyes other than the combination of the present invention had much color tone difference between the front and the rear as well as much bleeding at the edge, and also had low neutrality (Ink Nos. 2-8 to 2-9).

### 2-2. Example 2

### [Preparation of Dispersion Liquid]

Dispersion liquids 1-1, 2-1, 6-1 and 8-1 were prepared, respectively, similarly to dispersion liquids 1, 2, 6 and 8 prepared as described in 2-1. Example 1, except that DISPERBYK-190 (190) being a dispersant was replaced by JONCRYL 61J (manufactured by BASF Japan Ltd., acid value 195 mgKOH/g (61J)).

Dispersion liquids having the same compositions as those of dispersion liquids 1, 2, 6 and 8 prepared as described in 2-1. Example 1 were prepared to be served as dispersion liquids 1-2, 2-2, 6-2 and 8-2.

To 78.5 parts by mass of ion-exchanged water were added 20 parts by mass of JONCRYL 586 (manufactured by BASF Japan Ltd., acid value 108 mgKOH/g (586)) being a dispersant and 1.5 parts by mass of sodium hydroxide, and the mixture was heated to 60°C under stirring to obtain 20wt% of an aqueous dispersant solution of a sodium-neutralized product of JONCRYL 586. Dispersion liquids 1-3, 2-3, 6-3 and 8-3 were prepared, respectively, similarly to dispersion liquids 1, 2, 6 and 8, except that DISPERBYK-190 (190) being a dispersant was replaced by the above-mentioned aqueous dispersant solution.

### [Preparation of Ink 2-10]

Dispersion liquids 1-1, 2-1, 6-1 and 8-1, ethylene glycol (EG), propylene glycol (PG) and glycerol (GLY) as solvents, KF-351A (manufactured by Shin-Etsu Chemical Co., Ltd.) as a silicone surfactant, PROXEL GXL (manufactured by Arch Chemicals, Inc.) as a fungicide, and ion-exchanged water were mixed at a mass ratio set forth below, stirred and mixed uniformly, and subsequently filtered with a 1 µm-mesh filter to obtain ink 2-10.

| | |
|---|---|
| Dispersion liquid 1-1: | 1.5wt% |
| Dispersion liquid 2-1: | 2.5wt% |
| Dispersion liquid 6-1: | 5.0wt% |
| Dispersion liquid 8-1: | 5.0wt% |
| EG: | 30.0wt% |
| PG: | 10.0wt% |
| GLY: | 12.0wt% |
| Surfactant: | 0.2wt% |
| Fungicide: | 0.2wt% |
| Ion-exchanged water: | remaining part |

### [Preparation of Ink 2-11]

Ink 2-11 was prepared similarly to ink 2-10, except that 4.0wt% of polyethylene glycol 600 (PEG#600) was further contained.

### [Preparation of Ink 2-12]

Ink 2-12 was prepared similarly to ink 2-10, except that 4.0wt% of polypropylene glycol 400 (PEG400) was further contained.

### [Preparation of Ink 2-13]

Ink 2-13 was prepared similarly to ink 2-10, except that 4.0wt% of Liponic EG-1 (Formula (3)), manufactured by Lipo Chemicals Inc. was further contained. This compound is a compound of Formula (3) in which x+y+z = 26.

### [Preparation of Ink 14]

Ink 2-14 was prepared similarly to ink 2-10, except that dispersion liquids 1-1, 2-1, 6-1 and 8-1 were replaced, respectively, by dispersion liquids 1-2, 2-2, 6-2 and 8-2.

### [Preparation of Ink 15]

Ink 2-15 was prepared similarly to ink 2-10, except that dispersion liquids 1-1, 2-1, 6-1 and 8-1 were replaced, respectively, by dispersion liquids 1-3, 2-3, 6-3 and 8-3.

Table 10 shows the compositions (each numerical value indicates wt%) of inks 2-10 to 2-15. In Table 10, the section of "component" indicates dispersion liquids mixed in each ink and the type of dispersants contained in each dispersion liquid, as well as abbreviated names of the above-mentioned respective components. In Table 10, the section of "acid value" indicates the acid value (unit: mgKOH/g) of a dispersant contained in each dispersion liquid.

### [Table 10]

**Table 10: Compositions of inks 2-10 to 2-15**

| Ink No. | | | 2-10 | 2-11 | 2-12 | 2-13 | 2-14 | 2-15 |
|---|---|---|---|---|---|---|---|---|
| | Component | Acid value | | | | | | |
| Yellow dispersion liquid | Dispersion liquid 1-1(61J) | 195 | 1.5 | 1.5 | 1.5 | 1.5 | | |
| | Dispersion liquid 1-2(190) | 10 | | | | | 1.5 | |
| | Dispersion liquid 1- 3 (5 86) | 108 | | | | | | 1.5 |
| Red dispersion liquid | Dispersion liquid 2-1 (61J) | 195 | 2.5 | 2.5 | 2.5 | 2.5 | | |
| | Dispersion liquid 2-2(190) | 10 | | | | | 2.5 | |
| | Dispersion liquid 2-3(586) | 108 | | | | | | 2.5 |
| Violet dispersion liquid | Dispersion liquid 6-1(61J) | 195 | 5.0 | 5.0 | 5.0 | 5.0 | | |
| | Dispersion liquid 6-2(190) | 10 | | | | | 5.0 | |
| | Dispersion liquid 6-3 (586) | 108 | | | | | | 5.0 |
| Blue dispersion liquid | Dispersion liquid 8-1(61J) | 195 | 5.0 | 5.0 | 5.0 | 5.0 | | |
| | Dispersion liquid 8-2(190) | 10 | | | | | 5.0 | |
| | Dispersion liquid 8-3(586) | 108 | | | | | | 5.0 |
| Solvent | EG | | 30.0 | 30.0 | 30.0 | 30.0 | 30.0 | 30.0 |
| | PG | | 10.0 | 10.0 | 10.0 | 10.0 | 10.0 | 10.0 |
| | GLY | | 12.0 | 10.0 | 10.0 | 10.0 | 10.0 | 10.0 |
| | PEG#600 | | | 4.0 | | | | |
| | PPG#400 | | | | 4.0 | | | |
| | Formula (3) | | | | | 4.0 | | |
| Surfactant | KF-351A | | 0.2 | 0.2 | 0.2 | 0.2 | 0.2 | 0.2 |
| Fungicide | GXL | | 0.2 | 0.2 | 0.2 | 0.2 | 0.2 | 0.2 |
| Ion-exchanged water | | | Remaining part | Remaining part | Remaining part | Remaining part | Remaining part | Remaining part |

### [Measurement of Coordinate Value in Color Space]

Inks 2-10 to 2-15 were diluted 35 times with water, and then further diluted 20 times with acetone. Coordinated values in CIE L*a*b* color space of diluted inks 2-1 to 2-9 were measured using an ultraviolet-visible spectrophotometer V-650, JASCO Corporation. The values of L*, a* and b* measured for each ink are shown in Table 11.

### [Evaluation 4: Concentration]

A 15 cm × 15 cm rectangle was printed on pretreated polyester fibers at a coverage rate of 100% Duty and at 540 dpi × 720 dpi using the above-prepared inks 2-10 to 2-15 and using an inkjet printer Nassenger-V (manufactured by Konica Minolta, Inc., "Nassenger" is a registered trademark of Konica Minolta IJ Technologies, Inc.).

The concentration of the image sample was evaluated using a spectral colorimeter (SP60 series) Model SP62, manufactured by X-RITE, Inc. and by visual inspection according to the following standards:
1: The numerical value by the colorimeter is 50 or less, the image sample is evaluated to have sufficient concentration also by visual inspection
2: The numerical value by the colorimeter is more than 50, but the image sample is judged to have sufficient concentration by visual inspection
4: The numerical value by the colorimeter is more than 50, and the image sample is judged not to have sufficient concentration also by visual inspection

### [Evaluation 5: Ejectability]

The respective inks were ejected from the inkjet printer Nassenger-V at a coverage rate of 100% Duty at 25°C and in the low-humidity environment of 30% relative humidity, followed by temporary suspension of the ejection for 10 minutes, and were discharged again. During the redischarging, observation was made, for 256 nozzles, as to the number of occurrence of non-discharge nozzles, the number of occurrence of nozzles with shifted discharge angle (bent nozzle), and whether or not fine spray (splash) other than main droplets occurs. When these events occurred, it was judged that the ink was dried and adhered to the nozzle during the temporary suspension.
1: After the redischarging, there is no occurrence of non-discharge nozzle, with no increase in splash, either
2: After the redischarging, there is occurrence of about one or two bent nozzle(s), but the occurrence has no influence on the quality of the image, with no increase in splash, either
4: After the redischarging, there is occurrence of three or more non-discharge nozzles, also with conspicuous splash, and the quality of the image was deteriorated to an unacceptable level

The results of Evaluation 4 made on image samples obtained from the respective inks 2-10 to 2-15 and the results of Evaluation 5 made on the ejectability of inks 2-10 to 2-15 are shown in Table 11.

### [Table 11]

**Table 11: Evaluations of inks 2-10 to 2-15**

| Ink No. | Coordinate value in color space | | | Evaluation 4 | Evaluation 5 | Note |
|---|---|---|---|---|---|---|
| | L* | a* | b* | Concentration | Ejectability | |
| 2-10 | 57.8 | 7.1 | -27.7 | 2 | 2 | Example |
| 2-11 | 57.8 | 7.1 | -27.7 | 1 | 2 | Example |
| 2-12 | 57.8 | 7.1 | -27.7 | 1 | 2 | Example |
| 2-13 | 57.8 | 7.1 | -27.7 | 1 | 2 | Example |
| 2-14 | 57.8 | 7.1 | -27.7 | 1 | 1 | Example |
| 2-15 | 57.8 | 7.1 | -27.7 | 1 | 1 | Example |

When the ink having a combination of the disperse dyes of the present invention further contained at least one selected from polyethylene glycol having a molecular weight of 400 or more and 1,000 or less, polypropylene glycol having a molecular weight of 400 or more and 1,000 or less, and a compound represented by Formula (3), the concentration of the image sample was further increased (according to the comparison between Ink Nos. 2-11 to 2-13 and 2-10).

When the ink having a combination of the disperse dyes of the present invention further contained an acrylic resin having an acid value of 150 mgKOH/g or less, the concentration of the image sample was further increased, and discharge failure was also less likely to occur (according to the comparison between Ink Nos. 2-14 to 2-15 and 2-10).

### 3. Production and Evaluation of Ink Set

An ink set composed of two colors of the above-mentioned ink 1-1 (black ink) as a first ink and the above-mentioned ink 2-1 (gray ink) as a second ink is prepared. Using this ink set, a 15 cm × 15 cm rectangle was printed on pretreated polyester fibers according to the same conditions and method as the inkjet printing conditions and method in the above-mentioned first ink, and subsequently the polyester fibers were subjected to HT steam treatment, water washing and reduction cleaning, followed by further water washing and drying to obtain an image. The resulting image sample was evaluated in terms of Evaluation 1 (color tone difference between front and rear), Evaluation 2 (bleeding at edge), and Evaluation 3 (gradient continuity). Among these evaluations, the evaluation methods and evaluation standards in Evaluations 1 and 2 were, respectively, set similar to those in Evaluations 1 and 2 in the above-described section 1. Preparation and Evaluation of First Ink. The evaluation method and evaluation standards in Evaluation 3 were set as follows:

### [Evaluation 3: Gradient Continuity]

A printed image was formed under the printing conditions for the first ink and according to the same method, except that the coverage rate was changed from 10% to 100% Duty by an increment of 10% to print a 15 cm × 15 cm rectangle. The color tone and concentration of printed images at changed coverage rates by an increment of 10% from 10% to 100% were compared by visual inspection to thereby make evaluations according to the following standards:
2: Both the color tone change and the concentration change of printed images changed by an increment of 10% are uniform, with no inharmonious touch
4: At least one of the color tone change and the concentration change of printed images changed by an increment of 10% is not uniform, with an inharmonious touch

As a result, there was no color tone difference at all between the front surface and the rear surface (level indicated by 1), with no bleeding at all at the edge (level indicated by 1), and the gradient continuity was also satisfactory (level indicated by 2).

The ink of the present invention can be suitably used for image formation or dyeing for cloth by discharging the ink from an inkjet printing apparatus. In particular, the first ink of the present invention is suitable as a black ink, and the second ink of the present invention is suitable as a gray ink.

### Reference Signs List

- P: Cloth
- 2: Conveying mechanism
- 5: Head carriage
- 6: Air blower
- 6A: Fan
- 6B: Heating element
- 7: Ink tank
- 8: Steam mechanism
- 21: Viscous belt
- 22: Support roller
- 23: Conveying roller
- 24: Nip roller

### [Measurement of Coordinate Value in Color Space]

Inks 2-10 to 2-15 were diluted 35 times with water, and then further diluted 20 times with acetone. Coordinated values in CIE L*a*b* color space of diluted inks 2-1 to 2-9 were measured using an ultraviolet-visible spectrophotometer V-650, JASCO Corporation. The values of L*, a* and b* measured for each ink are shown in Table 11.

### [Evaluation 4: Concentration]

A 15 cm × 15 cm rectangle was printed on pretreated polyester fibers at a coverage rate of 100% Duty and at 540 dpi × 720 dpi using the above-prepared inks 2-10 to 2-15 and using an inkjet printer Nassenger-V (manufactured by Konica Minolta, Inc., "Nassenger" is a registered trademark of Konica Minolta IJ Technologies, Inc.).

The concentration of the image sample was evaluated using a spectral colorimeter (SP60 series) Model SP62, manufactured by X-RITE, Inc. and by visual inspection according to the following standards:
1: The numerical value by the colorimeter is 50 or less, the image sample is evaluated to have sufficient concentration also by visual inspection
2: The numerical value by the colorimeter is more than 50, but the image sample is judged to have sufficient concentration by visual inspection
4: The numerical value by the colorimeter is more than 50, and the image sample is judged not to have sufficient concentration also by visual inspection

### [Evaluation 5: Ejectability]

The respective inks were ejected from the inkjet printer Nassenger-V at a coverage rate of 100% Duty at 25°C and in the low-humidity environment of 30% relative humidity, followed by temporary suspension of the ejection for 10 minutes, and were discharged again. During the redischarging, observation was made, for 256 nozzles, as to the number of occurrence of non-discharge nozzles, the number of occurrence of nozzles with shifted discharge angle (bent nozzle), and whether or not fine spray (splash) other than main droplets occurs. When these events occurred, it was judged that the ink was dried and adhered to the nozzle during the temporary suspension.
1: After the redischarging, there is no occurrence of non-discharge nozzle, with no increase in splash, either
2: After the redischarging, there is occurrence of about one or two bent nozzle(s), but the occurrence has no influence on the quality of the image, with no increase in splash, either
4: After the redischarging, there is occurrence of three or more non-discharge nozzles, also with conspicuous splash, and the quality of the image was deteriorated to an unacceptable level

The results of Evaluation 4 made on image samples obtained from the respective inks 2-10 to 2-15 and the results of Evaluation 5 made on the ejectability of inks 2-10 to 2-15 are shown in Table 11.

### [Table 11]

**Table 11: Evaluations of inks 2-10 to 2-15**

| Ink No. | Coordinate value in color space | | | Evaluation 4 | Evaluation 5 | Note |
|---|---|---|---|---|---|---|
| | L* | a* | b* | Concentration | Ejectability | |
| 2-10 | 57.8 | 7.1 | -27.7 | 2 | 2 | Example |
| 2-11 | 57.8 | 7.1 | -27.7 | 1 | 2 | Example |
| 2-12 | 57.8 | 7.1 | -27.7 | 1 | 2 | Example |
| 2-13 | 57.8 | 7.1 | -27.7 | 1 | 2 | Example |
| 2-14 | 57.8 | 7.1 | -27.7 | 1 | 1 | Example |
| 2-15 | 57.8 | 7.1 | -27.7 | 1 | 1 | Example |

When the ink having a combination of the disperse dyes of the present invention further contained at least one selected from polyethylene glycol having a molecular weight of 400 or more and 1,000 or less, polypropylene glycol having a molecular weight of 400 or more and 1,000 or less, and a compound represented by Formula (3), the concentration of the image sample was further increased (according to the comparison between Ink Nos. 2-11 to 2-13 and 2-10).

When the ink having a combination of the disperse dyes of the present invention further contained an acrylic resin having an acid value of 150 mgKOH/g or less, the concentration of the image sample was further increased, and discharge failure was also less likely to occur (according to the comparison between Ink Nos. 2-14 to 2-15 and 2-10).

### 3. Production and Evaluation of Ink Set

An ink set composed of two colors of the above-mentioned ink 1-1 (black ink) as a first ink and the above-mentioned ink 2-1 (gray ink) as a second ink is prepared. Using this ink set, a 15 cm × 15 cm rectangle was printed on pretreated polyester fibers according to the same conditions and method as the inkjet printing conditions and method in the above-mentioned first ink, and subsequently the polyester fibers were subjected to HT steam treatment, water washing and reduction cleaning, followed by further water washing and drying to obtain an image. The resulting image sample was evaluated in terms of Evaluation 1 (color tone difference between front and rear), Evaluation 2 (bleeding at edge), and Evaluation 3 (gradient continuity). Among these evaluations, the evaluation methods and evaluation standards in Evaluations 1 and 2 were, respectively, set similar to those in Evaluations 1 and 2 in the above-described section 1. Preparation and Evaluation of First Ink. The evaluation method and evaluation standards in Evaluation 3 were set as follows:

### [Evaluation 3: Gradient Continuity]

A printed image was formed under the printing conditions for the first ink and according to the same method, except that the coverage rate was changed from 10% to 100% Duty by an increment of 10% to print a 15 cm × 15 cm rectangle. The color tone and concentration of printed images at changed coverage rates by an increment of 10% from 10% to 100% were compared by visual inspection to thereby make evaluations according to the following standards:
2: Both the color tone change and the concentration change of printed images changed by an increment of 10% are uniform, with no inharmonious touch
4: At least one of the color tone change and the concentration change of printed images changed by an increment of 10% is not uniform, with an inharmonious touch

As a result, there was no color tone difference at all between the front surface and the rear surface (level indicated by 1), with no bleeding at all at the edge (level indicated by 1), and the gradient continuity was also satisfactory (level indicated by 2).

The ink of the present invention can be suitably used for image formation or dyeing for cloth by discharging the ink from an inkjet printing apparatus. In particular, the first ink of the present invention is suitable as a black ink, and the second ink of the present invention is suitable as a gray ink.

### Reference Signs List

- P: Cloth
- 2: Conveying mechanism
- 5: Head carriage
- 6: Air blower
- 6A: Fan
- 6B: Heating element
- 7: Ink tank
- 8: Steam mechanism
- 21: Viscous belt
- 22: Support roller
- 23: Conveying roller
- 24: Nip roller

## Claims

1. A first aqueous ink for inkjet printing containing water and disperse dyes, the disperse dyes comprising at least one selected from an orange type disperse dye and a yellow type disperse dye, a red type disperse dye, and a blue type disperse dye, wherein in case of a blue type disperse dye the amount of the blue type disperse dye represented by Formula (2) is 2.0 wt% or more and 3.5 wt% or less to the total mass of the first aqueous ink, and
wherein
the red type disperse dye is a compound represented by Formula (1): 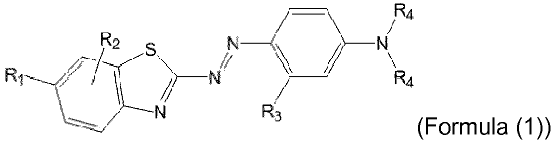 where
R₁ is a nitro group or a chloro group,
R₂ is a hydrogen atom when R₁ is a nitro group, and is a chloro group when R₁ is a chloro group,
R₃ is a hydrogen atom or a methyl group,
one R₄ is a cyanoethyl group, and
the other R₄ is selected from the group consisting of an ethyl group, a cyanoethyl group, an acetoxyethyl group and an ethyl carbonateethyl group, and
the blue type disperse dye is a compound represented by Formula (2): 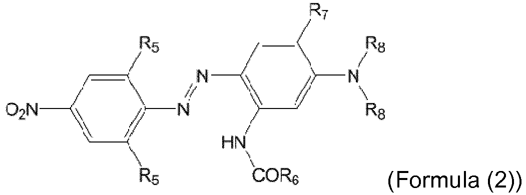
where
each R₅ is independently a group selected from the group consisting of a cyano group, a nitro group, and a bromo group, with the proviso that when one R₅ is a nitro group, the other R₅ is not a nitro group, and that when one R₅ is a bromo group, the other R₅ is not a bromo group,
R₆ is a methyl group or an ethyl group,
R₇ is selected from the group consisting of a hydrogen atom, a methoxy group and an ethoxy group, and
each R₈ is independently selected from the group consisting of a hydrogen atom, an ethyl group, a cyanoethyl group, a benzyl group, an acetoxyethyl group and a methoxyethyl group,
with R₇ being an ethoxy group when at least one R₈ is an acetoxyethyl group, and with R₇ being a hydrogen atom or a methoxy group when R₈ is other than an acetoxyethyl group, and
wherein the first aqueous ink further contains at least one selected from the group consisting of polyethylene glycol having a molecular weight of 400 or more and 1,000 or less, polypropylene glycol having a molecular weight of 400 or more and 1,000 or less, and a compound represented by Formula (3): 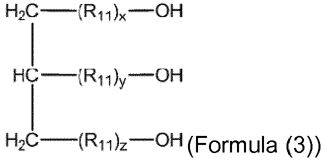
where each of R₁₁ represents an ethylene glycol group or a propylene glycol group, any of x, y and z is a positive integer, and x+y+z = 3 to 30.

2. The first aqueous ink according to claim 1, wherein the red type disperse dye included in the first aqueous ink is C.I. Disperse Red-154 or C.I. Disperse Red-177.

3. The first aqueous ink according to claim 1 or 2, wherein the blue type disperse dye included in the first aqueous ink is C.I. Disperse Blue-79 or C.I. Disperse Blue-165.

4. The first aqueous ink according to any one of claims 1 to 3, wherein the first aqueous ink further includes a blue type disperse dye having a maximum absorption wavelength of 630 nm or more and 680 nm or less.

5. The first aqueous ink according to any one of claims 1 to 4, wherein the first aqueous ink further contains an acrylic resin having an acid value of 150 mgKOH/g or less.

6. The first aqueous ink according to any one of claims 1 to 5, wherein the first aqueous ink is a black ink.

7. An ink set comprising the first aqueous ink according to any one of claims 1 to 6.

8. An inkjet printing method for forming an image on cloth with an aqueous ink, wherein an image is formed using the first aqueous ink according to any one of claims 1 to 6.

9. The inkjet printing method according to claim 8, wherein a portion of the cloth where an image is formed is cloth including polyester fiber.

## Patentansprüche

1. Erste wässrige Tinte zum Tintenstrahldrucken, die Wasser und Dispersionsfarbstoffe enthält, wobei die Dispersionsfarbstoffe zumindest einen Farbstoff aufweisen, der ausgewählt ist aus einem orangeartigen Dispersionsfarbstoff und einem gelbartigen Dispersionsfarbstoff, einem rotartigen Dispersionsfarbstoff und einem blauartigen Dispersionsfarbstoff, wobei im Falle eines blauartigen Dispersionsfarbstoffs die Menge des blauartigen Dispersionsfarbstoffs 2,0 Gew.-% oder mehr und 3,5 Gew.-% oder weniger der Gesamtmasse der ersten wässrigen Tinte beträgt, und
wobei
der rotartige Dispersionsfarbstoff eine durch Formel (1) dargestellte Verbindung ist: 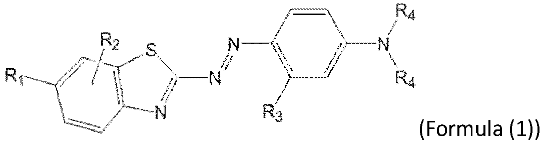 wobei
R₁ eine Nitrogruppe oder eine Chlorogruppe ist,
R₂ ein Wasserstoffatom ist, wenn R₁ eine Nitrogruppe ist, und eine Chlorogruppe ist, wenn R₁ ein Chlorogruppe ist,
R₃ ein Wasserstoffatom oder eine Methylgruppe ist,
ein R₄ eine Cyanoethyl-Gruppe ist, und
das andere R₄ ausgewählt ist aus der Gruppe, die aus einer Ethylgruppe, einer Cyanoethyl-Gruppe, einer Acetoxyethyl-Gruppe und einer Ethylcarbonatethyl-Gruppe besteht, und
der blauartige Dispersionsfarbstoff eine durch Formel (2) dargestellte Verbindung ist: 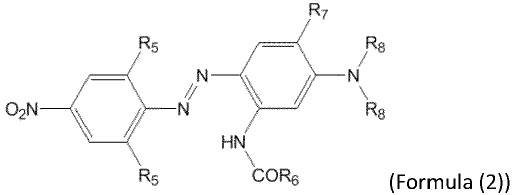
wobei
jedes R₅ unabhängig eine Gruppe ist, die ausgewählt ist aus der Gruppe, die aus einer Cyanogruppe, einer Nitrogruppe und einer Bromgruppe besteht, mit der Maßgabe, dass wenn ein R₅ eine Nitrogruppe ist, das andere R₅ keine Nitrogruppe ist, und dass wenn ein R₅ eine Bromgruppe ist, das andere R₅ keine Bromgruppe ist,
R₆ eine Methylgruppe oder eine Ethylgruppe ist,
R₇ ausgewählt ist aus der Gruppe, die aus einem Wasserstoffatom, einer Methoxygruppe und einer Ethoxygruppe besteht, und
jedes R₈ unabhängig ausgewählt ist aus der Gruppe, die aus einem Wasserstoffatom, einer Ethylgruppe, einer Cyanoethylgruppe, einer Benzylgruppe, einer Acetoxyethylgruppe und einer Methoxyethylgruppe besteht,
wobei R₇ eine Ethoxygruppe ist, wenn zumindest ein R₈ eine Acetoxyethylgruppe ist, und wobei R₇ ein Wasserstoffatom oder eine Methoxygruppe ist, wenn R₈ keine Acetoxyethylgruppe ist, und
wobei die erste wässrige Tinte zumindest eine Verbindung aus der Gruppe enthält, die aus Polyethylenglykol mit einem Molekulargewicht von 400 oder mehr und 1.000 oder weniger, einem Polypropylenglykol mit einem Molekulargewicht von 400 oder mehr und 1.000 oder weniger und einer Verbindung besteht, die durch die Formel (3) dargestellt ist: 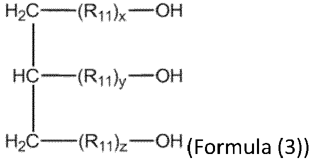
wobei jedes der R₁₁ eine Ethylenglykolgruppe oder eine Propylenglykolgruppe darstellt, und jedes von x, y und z eine positive ganze Zahl ist und x + y + z = 3 bis 30 ist.

2. Erste wässrige Tinte gemäß Anspruch 1, wobei der in der ersten wässrigen Tinte enthaltene rotartige Dispersionsfarbstoff C.I. Disperse Red-154 oder C.I. Disprse-Red-177 ist.

3. Erste wässrige Tinte gemäß Anspruch 1 oder 2, wobei der in der ersten wässrigen Tinte enthaltene blauartige Dispersionsfarbstoff C.I. Disperse Blue-79 oder C.I. Disperse Blue-165 ist.

4. Erste wässrige Tinte gemäß irgendeinem der Ansprüche 1 bis 3, wobei die erste wässrige Tinte ferner einen blauartigen Dispersionsfarbstoff mit einer maximalen Absorptionswellenlänge von 630 nm oder mehr und 680 nm oder weniger aufweist.

5. Erste wässrige Tinte gemäß irgendeinem der Ansprüche 1 bis 4, wobei die erste wässrige Tinte ferner ein Acrylharz mit einer Säurezahl von 150 mgKOH/g oder weniger aufweist.

6. Erste wässrige Tinte gemäß irgendeinem der Ansprüche 1 bis 5, wobei die erste wässrige Tinte eine schwarze Tinte ist.

7. Tintenset mit der ersten wässrigen Tinte gemäß irgendeinem der Ansprüche 1 bis 6.

8. Tintenstrahldruckverfahren zur Erzeugung eines Bildes auf Stoff mit einer wässrigen Tinte, wobei ein Bild unter Verwendung der ersten wässrigen Tinte gemäß irgendeinem der Ansprüche 1 bis 6 erzeugt wird.

9. Tintenstrahldruckverfahren gemäß Anspruch 8, wobei ein Bereich des Stoffs, auf dem ein Bild erzeugt wird, aus Tuch mit einer Polyesterfaser besteht.

## Revendications

1. Première encre aqueuse pour l'impression jet d'encre contenant de l'eau et des colorants dispersés, les colorants dispersés comprenant au moins un sélectionné parmi un colorant dispersé du type orange et un colorant dispersé du type jaune, un colorant dispersé du type rouge et un colorant dispersé du type bleu, dans lequel dans le cas d'un colorant dispersé du type bleu la quantité du colorant dispersé du type bleu est 2,0 % en poids ou plus et 3,5 % en poids ou moins de la masse totale de la première encre aqueuse, et
dans lequel
le colorant dispersé du type rouge est un composé représenté par la formule (1) : 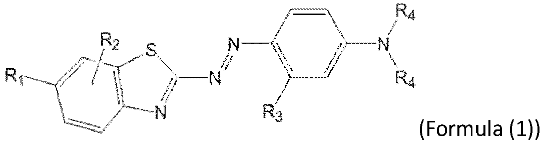 où
R₁ est un groupe nitro ou un groupe chloro,
R₂ est un atome d'hydrogène, si R₁ est un groupe nitro, et il est un groupe chloro, si R₁ est un groupe chloro,
R₃ est un atome d'hydrogène ou un groupe méthyle,
l'un des R₄ est un groupe cyanoéthyle, et
l'autre R₄ est sélectionné dans le groupe composé d'un groupe éthyle, d'un groupe cyanoéthyle, d'un groupe acetoxyéthyle et d'un groupe éthyle carbonateéthyle, et
le colorant dispersé du type bleu est un composé représenté par la formule (2) : 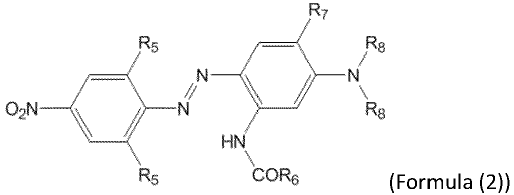
où
chaque R₅ est indépendamment un groupe sélectionné dans le groupe composé d'un groupe cyano, d'un groupe nitro et d'un groupe bromo, à la condition que si un R₅ est un groupe nitro, l'autre R₅ n'est pas un groupe nitro, et si un R₅ est un groupe bromo, l'autre R₅ n'est pas un groupe bromo,
R₆ est un groupe méthyle ou un groupe éthyle,
R₇ est sélectionné dans le groupe composé d'un atome d'hydrogène, d'un groupe méthoxy et d'un groupe éthoxy, et
chaque R₈ est indépendamment sélectionné dans le groupe composé d'un atome d'hydrogène, d'un groupe éthyle, d'un groupe cyanoéthyle, d'un groupe benzyle, d'un groupe acetoxyéthyle et d'un groupe méthoxyéthyle,
dans lequel R₇ est un groupe éthoxy, si au moins un R₈ est un groupe acetoxyéthyle, et dans lequel R₇ est un atome d'hydrogène ou un groupe méthoxy, si R₈ est différent d'un groupe acetoxyéthyle, et
dans lequel la première encre aqueuse contient en outre au moins un composé sélectionné dans le groupe composé de glycole polyéthylénique ayant un poids moléculaire de 400 ou plus et 1.000 ou moins, de glycole polypropylénique ayant un poids moléculaire de 400 ou plus et 1.000 ou moins, et d'un composé représenté par la formule (3) : 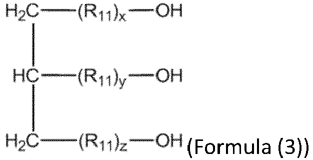
où chaque R₁₁ représente un groupe de glycole éthylénique ou un groupe de glycole propylénique, chacun de x, y et z est un nombre entier positif et x + y + z = 3 à 30.

2. Première encre aqueuse selon la revendication 1, dans laquelle le colorant dispersé du type rouge contenu dans la première encre aqueuse est C.I. Disperse Red-154 ou C.I. Disprse-Red-177.

3. Première encre aqueuse selon la revendication 1 ou la revendication 2, dans laquelle le colorant dispersé du type bleu contenu dans la première encre aqueuse est C.I. Disperse Blue-79 ou C.I. Disperse Blue-165.

4. Première encre aqueuse selon l'une quelconque des revendications 1 à 3, dans laquelle la première encre aqueuse comprend en outre un colorant dispersé du type bleu ayant une longueur d'onde d'absorption maximale de 630 nm ou plus et de 680 ou moins.

5. Première encre aqueuse selon l'une quelconque des revendications 1 à 4, dans laquelle la première encre aqueuse contient en outre une résine acrylique ayant un indice d'acide de 50 mgKHO/g ou moins.

6. Première encre aqueuse selon l'une quelconque des revendications 1 à 5, dans laquelle la première encre aqueuse est une encre noire.

7. Jeu d'encre comprenant la première encre aqueuse selon l'une quelconque des revendications 1 à 6.

8. Procédé d'impression par jet d'encre pour former une image sur une étoffe à l'aide d'une encre aqueuse, dans lequel l'image est formée en utilisant la première encre aqueuse selon l'une quelconque des revendications 1 à 6.

9. Procédé d'impression par jet d'encre selon la revendication 8, dans lequel une partie de l'étoffe où l'image est formée est du tissue comprenant des fibres de polyester.
